# EUROPEAN PATENT APPLICATION

(11) **EP 4 641 675 A2**
(43) Date of publication of application: **29.10.2025**
(21) Application number: 25168079.9
(22) Date of filing: 02.04.2025
(51) Int. Cl.: H01M 4/36, H01M 4/505, H01M 4/525, H01M 4/58, H01M 4/131, H01M 10/0525, H01M 4/02

(54) **POSITIVE ELECTRODE ACTIVE MATERIAL FOR RECHARGEABLE LITHIUM BATTERY, POSITIVE ELECTRODE INCLUDING THE POSITIVE ELECTRODE ACTIVE MATERIAL, AND RECHARGEABLE LITHIUM BATTERY INCLUDING THE POSITIVE ELECTRODE ACTIVE MATERIAL**

(30) Priority: 24.04.2024 KR 20240054518
(71) Applicant: SAMSUNG SDI CO., LTD., Yongin-si, Gyeonggi-do 17084 (KR)
(72) Inventor: Kim, Young-Ki, 17084 Yongin-si (KR); Choi, Aram, 17084 Yongin-si (KR); Kim, Sangmi, 17084 Yongin-si (KR); Doo, Sungwook, 17084 Yongin-si (KR); Kang, Gwiwoon, 17084 Yongin-si (KR); Lee, Soonrewl, 17084 Yongin-si (KR)
(74) Representative: Marks & Clerk LLP

(57) **Abstract**

A positive electrode active material comprises first particles having an olivine structure, second particles having a spinel structure, third particles having a layered structure and fourth particles in a weight ratio of about 0.5 wt% to about 5 wt% based on a total weight of the positive electrode active material. Also disclosed are positive electrodes including the positive active electrode material, and recharageable lithum batteries including the positive electrode material.

## Description

### BACKGROUND

The present invention relates to a positive electrode active material for a rechargeable lithium battery, a positive electrode including the positive electrode active material, and a rechargeable lithium battery including the positive electrode active material. More particularly, the present invention relates to a positive electrode active material including an olivine-based lithium compound, a positive electrode including the same, and a rechargeable lithium battery including the same.

With the rapid spread of electronic devices that use batteries, such as mobile phones, laptop computers, and electric vehicles, the demand for rechargeable batteries with high energy density and high capacity has rapidly increased. Accordingly, research and development to improve the performance of rechargeable lithium batteries is being actively conducted.

A rechargeable lithium battery includes a positive electrode and a negative electrode containing active materials capable of intercalation and deintercalation of lithium ions and an electrolyte. A rechargeable lithium battery produces electrical energy through the oxidation and reduction reactions when lithium ions are intercalated into and deintercalated from the positive electrode and negative electrode.

### SUMMARY

The present invention provides a positive electrode active material having high energy density, a high operating voltage, and high conductivity.

The present invention also provides a rechargeable lithium battery having high energy density, a high operating voltage, high charge and discharge efficiency, and high low-temperature characteristics.

According to first aspect of the present invention there is provided a positive electrode active material comprising first particles comprising a compound of Chemical Formula 1 and having an olivine structure, second particles comprising a compound of Chemical Formula 2 and having a spinel structure, third particles comprising a compound of Chemical Formula 3 and having a layered structure, and fourth particles comprising a compound of the Formula 4, wherein a weight ratio of the fourth particles is about 0.5 wt% to about 5 wt% based on a total weight of the positive electrode active material.

Chemical Formula 1: Liₐ₁Mn_{b1}Feₓ₁A_{y1}PO_{4-c1}

In Chemical Formula 1, 0.8≤a1≤1.2, 0.5≤b1≤0.9 (e.g., 0.5≤b1≤0.899), 0.1≤x1≤0.5 (e.g., 0.1≤x1≤0.499), 0.001≤y1≤0.05, 0<c1≤0.05, b1 + x1 + y1 = 1, and A is at least one of Al, Ti, V and Mg.

Chemical Formula 2: Liₐ₂Mn_{b2}Bₓ₂O_{4-c2}

In Chemical Formula 2, 0.8≤a2≤1.2, 1.9≤b2≤2.05, 0.001≤x2≤0.05 (e.g., 0≤x2≤0.05), 0≤c2≤0.05, and B is at least one of Mg and Al.

Chemical Formula 3: Liₐ₃Ni_{b3}Coₓ₃Mn_{y3}C_{z1}O_{2-c3}

In Chemical Formula 3, 0.8≤a3≤1.2, 0.5≤b3≤0.8, 0≤x3≤0.10, 0.1≤y3≤0.35, 0.01≤z1≤0.1 (e.g., 0≤z1≤0.1), 0≤c3≤0.05, b3 + x3 + y3 + z1 = 1, and C is at least one of Al, Ti, Mg, Zr, Mo and Nb.

Chemical Formula 4: Liₐ₄E_{b4}Dₓ₄O_{4-c4}

In Chemical Formula 4, 4.9≤a4≤6.1, 0.9≤b4≤1.1, 0≤x4≤0.015, 0≤c4≤0.05, E is Fe or Co, and D comprises Al.

According to a second aspect of the present invention there is provided a positive electrode for a rechargeable lithium battery comprising a positive electrode current collector, and a positive electrode active material layer on the positive electrode current collector. The positive electrode active material layer comprises the aforementioned positive electrode active material, a conductive material, and a binder.

According to a third aspect of the present invention there is provided a rechargeable lithium battery comprising the aforementioned positive electrode, a negative electrode comprising a negative electrode current collector and a negative electrode active material layer on the negative electrode current collector, and a separator between the positive electrode and the negative electrode.

At least some of the above and other features of the invention are set out in the claims.

### BRIEF DESCRIPTION OF THE FIGURES

The accompanying drawings are included to provide a further understanding of the present disclosure and are incorporated in and constitute a part of this specification. The drawings illustrate embodiments of the present disclosure and, together with the description, serve to explain principles of the present disclosure.
FIG. 1 is a simplified conceptual diagram showing a rechargeable lithium battery according to some embodiments of the present disclosure.
FIGS. 2 to 5 show rechargeable lithium batteries according to embodiments, where FIG. 2 is a cylindrical battery, FIG. 3 is a prismatic battery, and FIGS. 4 and 5 are pouch-type batteries.
FIGS. 6A and 6B are enlarged views showing positive electrode active material layers of a rechargeable lithium battery according to embodiments of the present disclosure.
FIG. 7A are scanning electron microscope (SEM) images showing first particles in a single particle form according to embodiments of the present disclosure.
FIG. 7B are SEM images showing first particles in a secondary particle form according to embodiments of the present disclosure.
FIG. 7C are SEM images showing second particles according to embodiments of the present disclosure.
FIG. 7D are SEM images showing third particles according to embodiments of the present disclosure.
FIG. 7E is an SEM image showing fourth particles according to embodiments of the present disclosure.

### DETAILED DESCRIPTION

In order to sufficiently understand the configuration and effect of the present disclosure, embodiments of the present disclosure will be described with reference to the accompanying drawings. It should be noted, however, that the present disclosure is not limited to the following embodiments and may be implemented in various forms. Rather, the embodiments are provided only to disclose the present disclosure and allow those skilled in the art to fully understand the scope of the present disclosure.

In this description, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise specially defined in this description, a particle diameter may be an average particle diameter. Also, a particle diameter means an average diameter (D₅₀), which refers to the diameter of particles at a cumulative volume of about 50 vol% in particle size distribution. The particle diameter (D₅₀) may be measured by methods widely known to those skilled in the art, for example, by a particle size analyzer, or by using a transmission electron microscope (TEM) image or a scanning electron microscope (SEM) image. Alternatively, the average diameter may be measured by a measurement device using dynamic light-scattering, wherein data analysis is conducted to count the number of particles for each particle size range, and an average diameter (D₅₀) value may then be obtained through calculation. Also, a laser scattering method may be utilized to measure the average diameter. In the laser scattering method, target particles are dispersed in a dispersion medium, then introduced into a commercial laser diffraction particle-diameter measurement instrument (e.g., MT3000 of Microtrac), and then irradiated to ultrasonic waves of about 28 kHz at an output of about 60 W. The average particle diameter (D₅₀) based on about 50% of particle diameter distribution may be calculated in the measurement instrument.

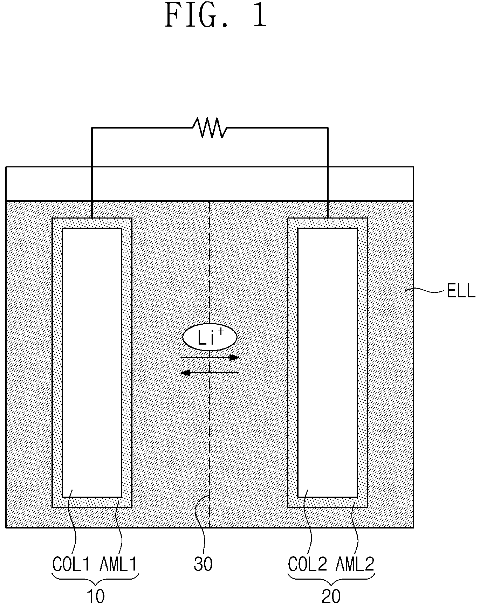

FIG. 1 is a simplified conceptual diagram of a rechargeable lithium battery according to some embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20 and the separator 30 may be immersed in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode

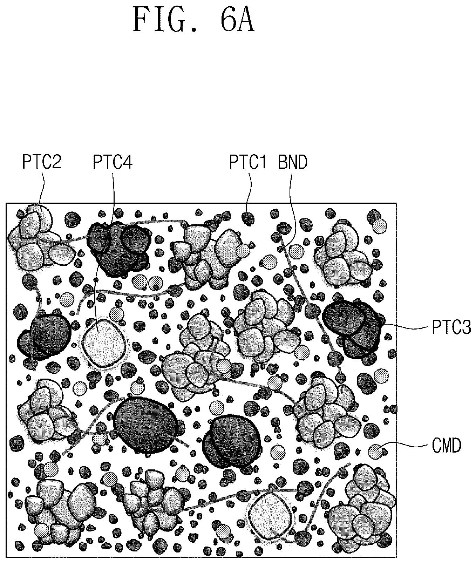

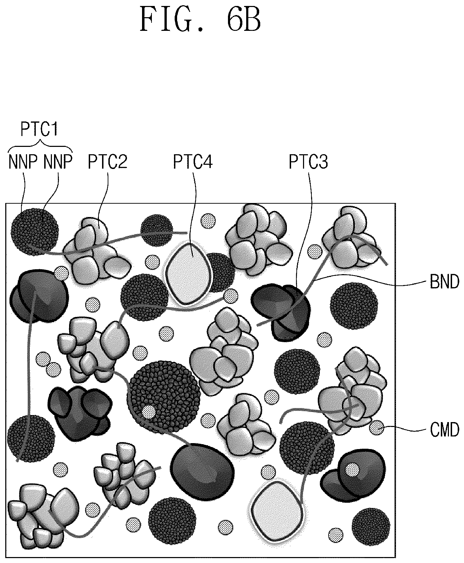

The positive electrode 10 for a rechargeable lithium battery includes a current collector COL1 and a positive electrode active material layer AML1 on the current collector COL1. The positive electrode active material layer AML1 includes a positive electrode active material, a binder and a conductive material. The positive electrode active material layer AML1 according to embodiments of the present disclosure will be described below with reference to FIGS. 6A and 6B. Aluminium may be used as the current collector COL1, but the present disclosure is not limited thereto.

### Negative Electrode

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material.

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity to the electrode. Any material that does not cause chemical change and is an electrically conductive material may be used in the battery. Examples of the conductive material may include a carbon-based material such as natural graphite, artificial graphite, carbon black, acetylene black, Ketjen black, a carbon fiber, a carbon nanofiber, and carbon nanotube; a metal-based material including copper, nickel, aluminium, silver, etc., in a form of a metal powder or a metal fiber; a conductive polymer such as a polyphenylene derivative; or a mixture thereof.

The current collector COL2 may use a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that reversibly intercalates/deintercalates lithium ions, a lithium metal, a lithium metal alloy, a material capable of doping into and de-doping from lithium, or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and at least one metal selected from Na, K, Rb, Cs, Fr, Be, Mg, Ca, Sr, Si, Sb, Pb, In, Zn, Ba, Ra, Ge, Al, and Sn.

The material capable of doping into and de-doping from lithium may be a Si-based negative electrode active material or a Sn-based negative electrode active material. The Si-based negative electrode active material may include silicon, a silicon-carbon composite, SiOx (0 < x < 2), a Si-Q alloy, or a combination thereof. In the Si-Q alloy, Q may be selected from an alkali metal, an alkaline earth metal, a Group 13 element, a Group 14 element (except for Si), a Group 15 element, a Group 16 element, a transition metal, a rare-earth element, or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include secondary particles (core), in which primary silicon particles are assembled, and an amorphous carbon first coating layer (shell) on the surface of the secondary particle. The amorphous carbon may also be provided between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon first coating layer on a surface of the core.

The Si-based negative electrode active material or the Sn-based negative electrode active material may be used in combination with a carbon-based negative electrode active material.

### Separator

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a first coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON^{™}), or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and the inorganic material may be mixed in one first coating layer, or a first coating layer including an organic material and a first coating layer including an inorganic material may be stacked.

### Electrolyte Solution

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), fluoroethylene carbonate (FEC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used. The cyclic carbonate and the chain carbonate may be mixed in a volume ratio of about 1: 1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

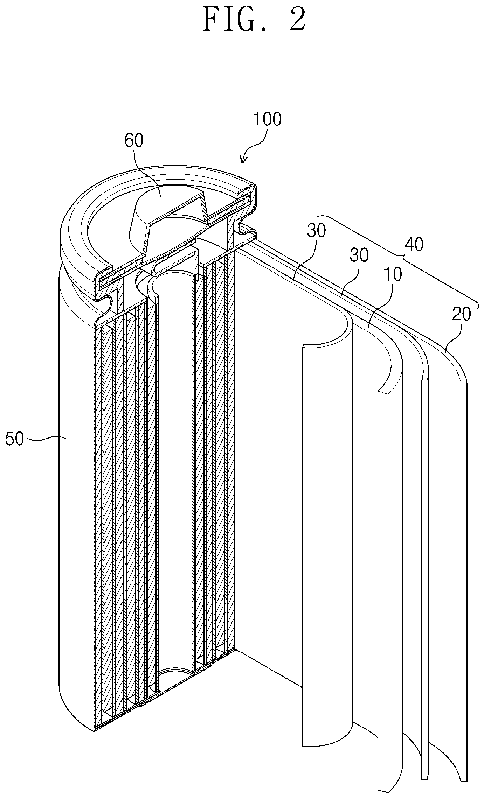

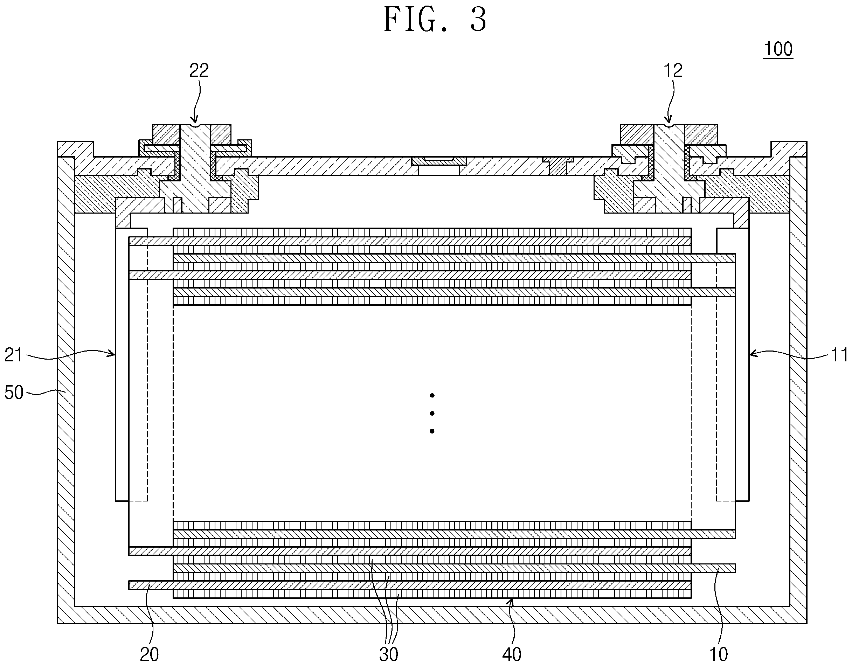

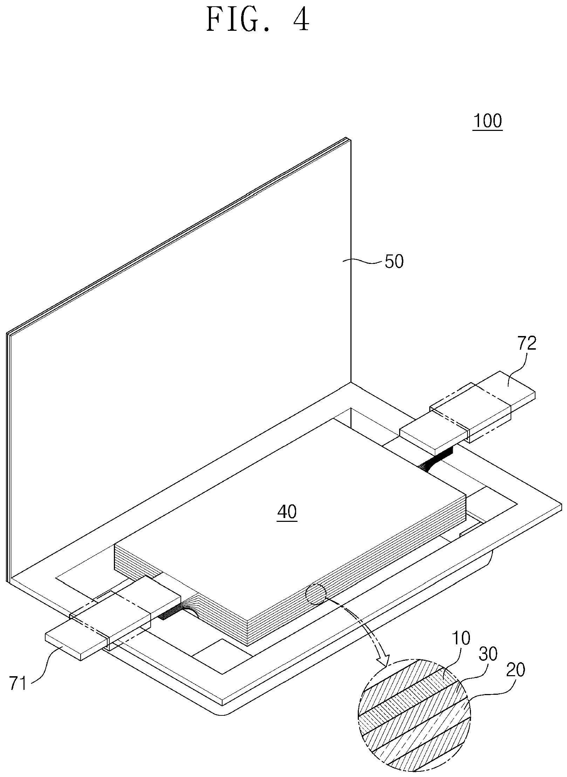

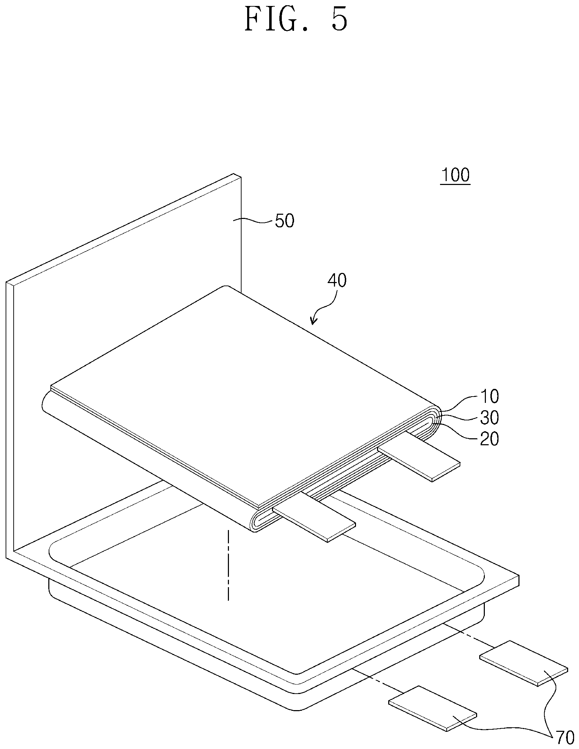

The rechargeable lithium battery may be classified into cylindrical, prismatic, pouch, or coin-type batteries, and the like depending on its shape. FIGS. 2 to 5 are schematic views illustrating rechargeable lithium batteries according to embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to outside of the battery.

Rechargeable lithium batteries according to embodiments may be used in automobiles, mobile phones, and/or various types of electric devices, as nonlimiting examples.

FIG. 6A and FIG. 6B are enlarged views showing positive electrode active material layers of a rechargeable lithium battery according to embodiments of the present disclosure. Referring to FIG. 6A, as discussed above, the positive electrode active material layer AML1 (see FIG. 1) includes first particles PTC1, second particles PTC2, third particles PTC3, fourth particles PTC4, a conductive material CDM, and a binder BND. A plurality of the first particles PTC1, a plurality of the second particles PTC2, a plurality of the third particles PTC3 and a plurality of the fourth particles PTC4 constitutes a positive electrode active material according to the present invention.

The amount of the positive electrode active material (PTC1, PTC2, PTC3 and PTC4) in the positive electrode active material layer AML1 may range from about 90 wt% to about 99 wt% relative to 100 wt% of the positive electrode active material layer AML1. Each of the amount of the binder BND and the conductive material CDM may be about 0.5 wt% to about 5 wt% relative to 100 wt% of the positive electrode active material layer AML1.

The binder BND may combine the first particles PTC1, the second particles PTC2, the third particles PTC3, the fourth particles PTC4 and the conductive material CDM with each other. The binder BND may include at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon. But the present disclosure is not limited to these examples.

The conductive material CDM may be used to improve the conductivity of the positive electrode active material layer AML1. Any conductive material that does not cause a chemical change in the positive electrode active material layer AML1 may be used without limitation as the conductive material CDM. For example, the conductive material CDM may include a carbon-based material such as natural graphite, artificial graphite, carbon black, acetylene black, Ketjen black, carbon fiber, carbon nano-fiber, and carbon nano-tube; a metal-based material containing copper, nickel, aluminium, silver or the like and having a metal powder or metal fiber form; a conductive polymer such as a polyphenylene derivative; or a mixture thereof.

Hereinafter, each of the first particles PTC1, the second particles PTC2, the third particles PTC3 and the fourth particles PTC4 will be explained in more detail.

### First Particles

Referring to FIG. 6A, the first particles PTC1 may have a single particle form. In the description, the single particle may mean a sole particle that does not have a grain boundary inside. The single particle has a morphology phase, and may mean a single particle, a monolith structure, a monolithic structure, or a non-agglomerated particle, in which the particles exist as an independent phase that are not agglomerated. For example, the single particle may be a single crystal. In addition, the single particle may be a particle containing several crystals. The single particle may be a solely separated form. Otherwise, the single particle may be in the form of 2 to 100 single particles attached to each other.

The first particles PTC1 may be a nano-type, i.e. of nanometer size, or a micro-type, i.e. of micrometer size. The first particles PTC1 may include at least one first primary particle NNP. In an embodiment, the first primary particles NNP may agglomerate to have a secondary particle form that is similar to that of the second particle PTC2. Though the first primary particles NNP agglomerate, the first particles PTC1 may not be spherical like the second particles PTC2. That is, the first particle PTC1 may have a random shape.

The first particles PTC1 may be provided in various sizes. For example, the average diameter of the first particles PTC1 may be about 500 nm to about 2.5 µm, or about 1 µm. The minimum diameter of the first particles PTC1, that is, the particle diameter of the primary particles, may be about 100 nm to about 500 nm, or about 100 nm to about 200 nm.

In embodiments, the average diameter may be measured by a particle size analyzer. The average particle diameter may mean the diameter (D₅₀) of particles at an accumulated volume of about 50 vol% in particle size distribution. The minimum particle diameter, that is, the diameter of the primary particles, may mean the diameter measured by randomly selecting about 30 primary particles in an electron microscope image of the first particles PTC1.

The porosity of the first particles PTC1 may be greater than about 40%. Porosity may be defined as the pore volume divided by the total volume of a particle. The span value of the first particles PTC1, analyzed by a particle size analyzer, may be in a range from about 0.3 to about 0.75.

In an embodiment, each of the first particles PTC1 may include a first coating layer on the surface thereof. The first coating layer may cover the entire surface of the first particle PTC1 or may cover a portion of the surface of the first particle PTC1. For example, the first coating layer may include carbon and/or a carbon-containing compound.

The first coating layer may further include at least one of a titanium-containing compound, a magnesium-containing compound, an aluminium-containing compound and a vanadium-containing compound. The titanium-containing compound, the magnesium-containing compound, the aluminium-containing compound, and the vanadium-containing compound may be, for example, a metal oxide, a metal hydroxide, a metal carbonate, a synthesized compound thereof or a mixture thereof. The metal-containing compound may further include other metal or non-metal elements. For example, the metal-containing compound may further include lithium. By including the first coating layers, the first particles PTC1 may show improved structural stability and improved electrical conductivity. The first particles PTC1 include an olivine-based lithium compound represented by

Chemical Formula 1: Liₐ₁Mn_{b1}Feₓ₁A_{y1}PO_{4-c1}

In Chemical Formula 1, 0.8≤a1≤1.2, 0.5≤b1≤0.9 (e.g., 0.5≤b1≤0.899), 0.1≤x1≤0.5 (e.g., 0.1≤x1≤0.499), 0.001≤y1≤0.05, 0<c1≤0.05 and b1 + x1 + y1 = 1 are satisfied. A is at least one of Mg, Ti, V and Al. A is a dopant doped in the first particle PTC1. For example, A may include Ti.

The first particles PTC1 may further include carbon derived from the first coating layers. The amount of carbon in the first particles PTC1 may be about 0.5 wt% to about 5 wt%, about 0.5 wt% to about 3 wt%, about 0.5 wt% to about 2 wt%, or about 1.5 wt% to about 2.5 wt%.

A method for measuring the element content in the first coating layers of the first particles PTC1 may include performing scanning electron microscopy-energy dispersive X-ray spectroscopy (SEM-EDS) on the first particles PTC1. Through the analysis, the carbon and metal contents in the first coating layers may be confirmed. As a method for measuring the element content in the first coating layers, an inductively coupled plasma-mass spectrometry (ICP-MS), an inductively coupled plasma optical emission spectroscopy (ICP-OES), or the like may be used in addition to the SEM-EDS.

Referring to FIG. 6B, the first particles PTC1 may have a secondary particle form in which a plurality of particles are agglomerated with each other to form each of the first particles. The secondary particle may have a form in which 2 to 100 first primary particles NNP are agglomerated with each other. The first primary particles NNP is a minimum crystal unit constituting the secondary particles and is a form distinguished from a single particle. The first particle PTC1 may have a spherical or elliptical shapes.

In an embodiment, the first particle PTC1 may include a coating layer on the surface thereof. The coating layer may cover the entire surface of the first particle PTC1 or a portion of the surface of the first particle PTC1. For example, the coating layer may include carbon and/or a carbon-containing compound. The first particle PTC1 may have improved structural stability or improved electrical conductivity due to the coating layer.

The coating layer may further include at least one selected from the group consisting of an aluminium-containing compound, a titanium-containing compound, a magnesium-containing compound and a vanadium-containing compound. A metal-containing compound such as the aluminium-containing compound, the titanium-containing compound, the magnesium-containing compound and the vanadium-containing compound may be, for example, a metal oxide, a metal hydroxide, a metal carbonate, a synthesized compound thereof or a mixture thereof. The metal-containing compound may further include other metal or non-metal elements. For example, the metal-containing compound may further include lithium.

In an embodiment, the first particles PTC1 may further include a grain boundary coating layer on the surface of each of the first primary particles NNP. The grain boundary coating layers may be present in the first particles PTC1. The grain boundary coating layer may be formed along the interface between the first primary particles NNP. In other words, the grain boundary coating layers may mean a material coated on the grain boundary in the first particles PTC1. The grain boundary coating layers may include carbon and/or a carbon-containing compound. The grain boundary coating layers may further include at least one of an aluminium-containing compound, a titanium-containing compound, a magnesium-containing compound and a vanadium-containing compound.

The interior of the first particles PTC1 may mean the entire interior of the first particles PTC1 excluding the surfaces of the first particles PTC1. For example, the interior of the first particles PTC1 may mean an entire interior from a depth of about 10 nm from the surface of the first particles PTC1, or a region from a depth of about 10 nm to a depth of about 2 µm.

When the first particles PTC1 include the grain boundary coating layers, structural stability may be reinforced, and a uniform coating layer may be formed on the surface of each of the first particles PTC1. In addition, the electrical conductivity of the first particle PTC1 may be further improved.

In embodiments, the average diameter of the first particles PTC1 may be about 2 µm to about 15 µm, about 3 µm to about 10 µm, or about 3 µm to about 7 µm. For example, the first particle diameters of the first particles PTC1 may be about 5 µm. The average diameter of the first particles PTC1 may be smaller than the average particle diameter of second particles PTC2 (which will be explained later). As discussed above, the average diameter may be measured by a particle size analyzer. The average diameter may mean the diameter (D₅₀) of particles at an accumulated volume of about 50 vol% in particle size distribution.

The average diameter of the first primary particles NNP of the first particles PTC1 may be about 10 nm to about 400 nm, about 20 nm to about 300 nm, about 50 nm to about 200 nm, about 50 nm to 150 nm, or about 100 nm to about 200 nm. In embodiments, the average diameter of the first primary particles NNP may mean a diameter measured by randomly selecting about 30 first primary particles NNP in an electron microscope image on a positive electrode active material. The average diameter of the first primary particle NNP may be uniform.

The first particles PTC1 may have a spherical shape in which the first primary particles NNP with a nano-size may be agglomerated. The first particles PTC1 may exhibit the characteristics that follow from the close agglomeration of the first primary particles NNP with each other. The first particles PTC1 may have spherical or elliptical shapes. The average particle diameter (D₅₀) of the first particles PTC1 may be about 2 µm to about 15 µm. The porosity of the first particles PTC1 may be about 20% to about 40%. Porosity may be defined as the pore volume divided by the total volume of a particle. The span value of the first particles PTC1 analyzed by a particle size analyzer may be about 0.3 to about 0.75.

### Second Particles

The second particles PTC2 may have a single particle form similar to the above-described first particles PTC1. The single particle form may be the same as or similar to that previously explained with respect to the first particles PTC1. In embodiments, the second particles PTC2 may each have a form constituted by one single particle. In other embodiments, the second particles PTC2 may have a form in which a plurality of single particles are attached to each other. Since the positive electrode active material according to the present disclosure includes the second particles PTC2 with a single particle form, a rechargeable battery with high capacity and high energy density may be provided when including the second particles PTC2.

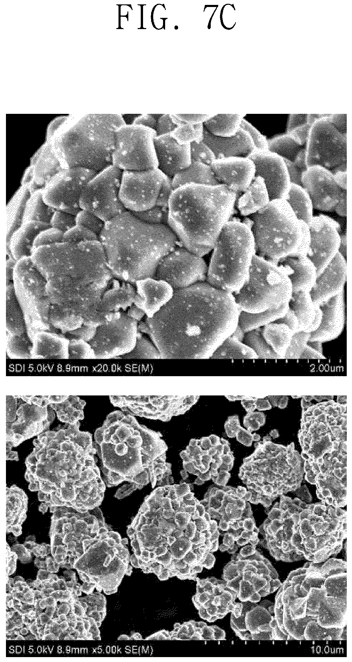

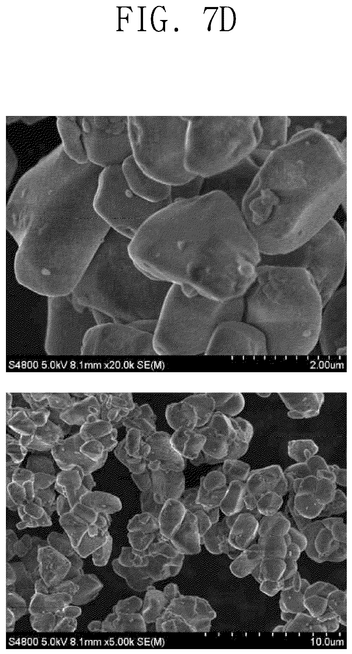

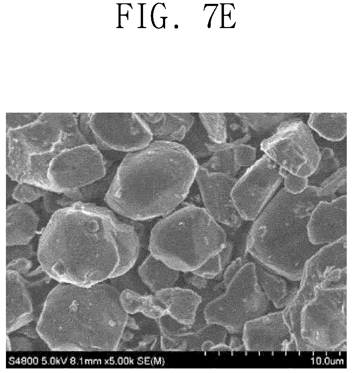

In another embodiment of the present disclosure, the second particles PTC2 may have a secondary particle form. Referring to FIGS. 6A and 6B, and especially to FIG. 7C, the second particle PTC2 may have a polycrystal form and may each include a secondary particle in which at least two or more second primary particles are agglomerated. In other words, one second particle PTC2 may include a plurality of second primary particles agglomerated with each other. The second particles PTC2 may have agglomerated spherical shapes of the second primary particles. But the agglomerated second primary particles forming the second particles PTC2 also may have random shapes.

In embodiments, the second particles PTC2 may each include a second coating layer on the surface thereof. By including the second coating layers, the second particles PTC2 may effectively suppress structural collapse due to repeated charging and discharging. Accordingly, the lifetime characteristics of the rechargeable battery including the second particles PTC2 may be improved.

The second coating layer may include an aluminium-containing compound, a magnesium-containing compound, or a combination thereof. Such metal-containing compound in the second coatings layer may be, for example, a metal oxide, a metal hydroxide, a metal carbonate, a synthesized compound thereof or a mixture thereof. The metal-containing compounds may further include other metal or nonmetal elements. For example, the second coating layers may further include lithium, manganese, and/or nickel.

The average diameter of the second particles PTC2 may be about 3 µm to about 20 µm, about 4 µm to about 15 µm, or about 5 µm to about 10 µm. For example, the average diameter of the second particles PTC2 may be about 6 µm. The average diameter of the second particles PTC2 may be greater than the average diameter of the first particles PTC1. If the second particles PTC2 includes a plurality of single particles, the average diameter of the single particles of the second particles PTC2 may be greater than the average diameter of the first particles PTC1.

In embodiments, the particle diameter may be obtained by measuring a diameter by randomly selecting about 30 second primary particles in an electron microscope image on a positive electrode active material and taking a diameter (D₅₀) of the particles at an accumulated volume of about 50 vol% in particle size distribution as the average particle diameter. The size of the second primary particles may be uniform. The second primary particles may have a larger average size (diameter) than the first primary particles. A difference between the average diameters of the second primary particles and the first primary particles may be about 300 nm or more. An average diameter of the second primary particles may be about 0.5 µm to about 2.5 µm.

The second particles PTC2 include a lithium compound with a spinel structure, represented by Chemical Formula 2:

Liₐ₂Mn_{b2}Bₓ₂O_{4-c2}

In Chemical Formula 2, 0.8≤a2≤1.2, 1.9≤b2≤2.05, 0.001≤x2≤0.05 (e.g., 0≤x2≤0.05), 0≤c2≤0.05, and B is at least one of Mg and Al. B is a dopant doped in the second particles PTC2. For example, B may include Ti.

### Third Particles

The third particles PTC3 may have a single particle form that is similar to the first particles PTC1. Thus, explanation on the single particle may be the same as or similar to the above explanation of the first particles PTC1. In embodiments, the third particles PTC3 may have a form composed of one single particle. In other embodiments, the third particle PTC3 may have a form in which a plurality of single particles are attached to each other. The positive electrode active material according to embodiments of the present disclosure includes the third particles PTC3 in a single particle form, and the high capacity and high energy density of a rechargeable battery may be accomplished as a result of the inclusion of the third particles PTC3.

The third particles PTC3 according to an embodiment of the present disclosure may have a secondary particle form in which a plurality of particles are attached to each other. The secondary particles may be 2 to 100 second primary particles attached to each other. The average diameter of the second primary particles may be the same as or greater than the average diameter of the first primary particles. The second primary particle is a minimum crystal unit composing the secondary particle that is distinguished from single particles. The third particle PTC3 may have spherical or elliptical shapes.

In embodiments, each of the third particles PTC3 may include a third coating layer on the surface thereof. By including the third coating layers in the third particles PTC3, structural collapse due to repeated charging and discharging may be effectively suppressed. Accordingly, the lifetime characteristics of a rechargeable battery including the third particles PTC3 may be improved.

The third coating layers may include an aluminium-containing compound, a titanium-containing compound, a magnesium-containing compound, a zirconium-containing compound, a molybdenum-containing compound, a niobium-containing compound, or a combination thereof. Such metal-containing compounds in the third coating layers may be, for example, a metal oxide, a metal hydroxide, a metal carbonate, a synthesized compound thereof, or a mixture thereof. The metal-containing compounds may further include other metal or nonmetal elements. For example, the third coating layers may further include lithium, manganese, and/or nickel.

The average particle diameter of the third particles PTC3 may be about 2 µm to about 15 µm, about 2 µm to about 10 µm, or about 3 µm to about 10 µm, or about 2 µm to about 5 µm. For example, the average diameter of the third particles PTC3 may be about 6 µm. The average diameter of the third particles PTC3 may be greater than the average diameter of the first particles PTC1. If the third particle PTC3 includes a plurality of single particles, the average diameter of the single particles of the third particle PTC3 may be greater than the average diameter of the first particles PTC1.

In embodiments, the average diameter may be obtained by measuring a diameter by randomly selecting about 30 third particles PTC3 in an electron microscope image on a positive electrode active material and taking the diameter (D₅₀) of particles at an accumulated volume of about 50 vol% in particle size distribution as the average particle diameter.

A method for measuring the metal content in the third coating layer of the third particle PTC3 may include performing scanning electron microscopy-energy dispersive X-ray spectroscopy (SEM-EDS) on the third particles PTC3. Through the analysis, the metal contents in the third coating layers may be confirmed. As a method for measuring the metal content in the third coating layers, an inductively coupled plasma-mass spectrometry (ICP-MS), an inductively coupled plasma optical emission spectroscopy (ICP-OES) or the like may be used in addition to the SEM-EDS.

The third particles PTC3 include a lithium nickel-based composite oxide as a nickel-based active material. For example, the third particles PTC3 may include a high nickel-based positive electrode active material containing the high content of nickel. The high nickel-based positive electrode active material may provide for high capacity and high performance. The third particles PTC3 include a lithium nickel-based composite oxide with a layered structure, represented by Chemical Formula 3:

Liₐ₃Ni_{b3}Coₓ₃Mn_{y3}C_{z1}O_{2-c3}

In Chemical Formula 3, 0.8≤a3≤1.2, 0.5≤b3≤0.8, 0≤x3≤0.10, 0.1≤y3≤0.35, 0.01≤z1≤0.1 (e.g., 0≤z1≤0.1), 0≤c3≤0.05, b3 + x3 + y3 + z1 = 1, and C is at least one of Al, Ti, Mg, Zr, Mo and Nb. C is a dopant doped in the third particles PTC3.

### Fourth Particles

The fourth particles PTC4 may have a single particle form similar to the first particle PTC1. Thus, explanation of the single particle form of the fourth particles PTC4 may be the same as or similar to the above explanation of the single particle form of the first particles PTC1. In embodiments, the fourth particles PTC4 may have a form composed of one single particle. In other embodiments, the fourth particles PTC4 may have a form in which a plurality of single particles are attached to each other. The positive electrode active material according to embodiments of the present disclosure includes the fourth particles PTC4 in a single particle form, and the battery may have high capacity and high energy density. The fourth particles may be configured to be electrochemically inactive after a first cycle. This means that a sacrificial lithium source, lithium ferrite oxide (LFO), included in the positive electrode active material may undergo an electrochemical reaction during the first charge cycle, releasing lithium ions into the electrolyte and/or the anode material. After this process, LFO no longer actively participates in further charge/discharge cycles, meaning it does not contribute to the reversible capacity of the battery. The electrochemical inactivity of LFO after the first cycle can be verified by cyclic voltammetry (CV) or galvanostatic charge-discharge measurements, showing that: (1) no significant redox peaks corresponding to LFO appear in CV scans after the first cycle; (2) the voltage plateau associated with LFO disappears in subsequent charge/discharge cycles; and (3) capacity retention analysis indicates that LFO does not contribute to reversible capacity after the first cycle.

In embodiments, each of the fourth particles PTC4 may include a fourth coating layer on the surface thereof. By including the fourth coating layer in the fourth particles PTC4, structural collapse due to repeated charging and discharging may be effectively suppressed. Accordingly, the lifetime characteristics of a rechargeable battery including the fourth particles PTC4 may be improved.

The fourth coating layers may include an aluminium-containing compound. Such metal-containing compounds in the fourth coating layer may be, for example, a metal oxide, a metal hydroxide, a metal carbonate, a synthesized compound thereof, or a mixture thereof. The metal-containing compounds may further include other metal or nonmetal elements. For example, the fourth coating layers may further include lithium, manganese, and/or nickel.

The average particle diameter of the fourth particles PTC4 may be about 2 µm to about 15 µm, about 2 µm to about 10 µm, about 3 µm to about 10 µm, or about 4 µm to about 10 µm. The average diameter of the fourth particles PTC4 may be greater than the average diameter of the first particles PTC1. If the fourth particle PTC4 includes a plurality of single particles, the diameter size of the single particles of the fourth particle PTC4 may be greater than the average particle diameter of the first particles PTC1.

In embodiments, the average particle diameter may be obtained by measuring a diameter by randomly selecting about 30 fourth particles PTC4 in an electron microscope image on a positive electrode active material and taking the diameter (D₅₀) of particles at an accumulated volume of about 50 vol% in particle size distribution as the average diameter.

The fourth particle PTC4 includes a lithium compound represented by Chemical Formula 4:

Liₐ₄E_{b4}Dₓ₄O_{4-c4}

In Chemical Formula 4, 4.9≤a4≤6.1, 0.9≤b4≤1.1, 0≤x4≤0.015, 0≤c4≤0.05, E is Fe or Co, and D is Al. Particularly, if E is Fe, a4 may be 5, and if E is Co, a4 may be 6.

The fourth particles PTC4 may further include carbon derived from the coating layers. The amount of carbon in the fourth particles PTC4 may be about 0.5 wt% to about 5 wt%, about 0.5 wt% to about 3 wt%, or about 0.5 wt% to about 2 wt%. The amount of carbon in the fourth particles PTC4 may be less than the amount of carbon in the first particles PTC1. This is because the fourth particles PTC4 may be a single particle and it is difficult to form a coating layer smoothly compared to the first particle PTC1, which may be a secondary particle.

The fourth particles PTC4 may participate in the formation of a solid electrolyte interface (SEI) film on the surface of a negative electrode during charging and discharging. The fourth particles PTC4 may be converted to irreversible Li, which no longer participates in charge and discharge reactions. Accordingly, defects of reducing the capacity of a positive electrode active material layer AML1 may occur.

The fourth particles PTC4 according to an embodiment of the present disclosure may include an oxide containing Fe. The fourth particles PTC4 may be served as a sacrificial positive electrode that may compensate for irreversible Li. The fourth particles PTC4 may be decomposed in a formation process to provide Li and may not participate in subsequent charge and discharge processes. For example, if Li₅FeO₄ constitutes the fourth particles PTC4, Li₅FeO₄ may be decomposed at between about 3.7 V and about 3.9 V, and five Li atoms may be provided in contrast to singular Li. If the fourth particles PTC4 including the compound is used in an amount range to be described below, there is compensation for irreversible Li. As such, the fourth particles PTC4 according to an embodiment of the present disclosure may include Li₅FeO₄, LiFeO₂, LiFe₅O₈, or a combination thereof. And in particular, the fourth particles PTC4 may include Li₅FeO₄. Since Li₅FeO₄ may provide lots of Li atoms in a formation process, more irreversible Li may be compensated for. Accordingly, the effect as the sacrificial positive electrode may be achieved to a greater extent.

The fourth particles PTC4 according to an embodiment of the present disclosure may include an oxide containing cobalt. For example, if Li₆CoO₄ constitutes the fourth particle PTC4, Li₆CoO₄ may be decomposed at between about 3.7 V and about 3.9 V, and six Li atoms may be provided in contrast to singular Li. If the fourth particles PTC4 including the compound are provided in an amount range to be described later, compensation for irreversible Li may be sufficiently achieved.

The fourth particle PTC4 according to an embodiment of the present disclosure may include Li₆CoO₄, LiCoO₂, LiCo₅O₈, or a combination thereof. For example, the fourth particle PTC4 may include Li₆CoO₄. Since Li₆CoO₄ may provide lots of Li atoms in a formation process, more irreversible Li may be compensated for. Accordingly, the effect of a sacrificial positive electrode may be achieved to a greater extent.

The positive electrode active material according to embodiments of the present disclosure will be explained in more detail with reference to FIGS. 6A and 6B. The positive electrode active material of the present disclosure includes the first particles PTC1, the second particles PTC2, the third particles PTC3 and the fourth particles PTC4. The mixing ratio of the sum of first particles PTC1, the second particles, and the third particles PTC3 to the fourth particles PTC4 in the positive electrode active material may be about 90:10 to about 50:50. Otherwise, the mixing ratio may be about 95:5 to about 99.5:0.5, or about 98.5:1.5 to about 99.5: 0.5. The amount of the first particles PTC1 and the third particles PTC3 may be greater than the amount of the fourth particles PTC4 in the positive electrode active material.

Referring to FIG. 6A and FIG. 6B again, the positive electrode active material according to some embodiments of the present disclosure will be explained in more detail. The first particles PTC1 and the second particles PTC2 may constitute a main active material, and the content of the main active material may be about 70 parts by weight to about 90 parts by weight, or about 80 parts by weight to about 90 parts by weight, based on 100 parts by weight of the positive electrode active material.

A lithium iron phosphate-based positive electrode active material (first particles PTC1) with an olivine crystal structure is relatively inexpensive compared to other positive electrode materials and has excellent stability and lifetime characteristics but may have low energy density and is difficult to use at a high voltage. A lithium manganese oxide-based positive electrode active material (second particles PTC2) with a spinel structure has a high operating voltage and excellent stability and is inexpensive, but like the first particles PTC1, may have a low energy density.

Since the first particles PTC1 and the second particles PTC2 are mixed and used as the main active material in the positive electrode active material according to the present disclosure, it is inexpensive and stable, and a high operating voltage and excellent lifetime characteristics may be achieved. Relatively low energy density may be improved by mixing the third particles PTC3, which provide excellent capacity and output characteristics. Further, by adding the fourth particles PTC4 that functions as a sacrificial positive electrode, even higher capacity and density may be achieved.

The mixing ratio of the first particles PTC1 and the second particles PTC2 may be about 4:6 to about 6:4, or about 4.5:5.5 to about 5.5:4.5 based on weight. The amount of manganese in the main active material composed of the first particles PTC1 and the second particles PTC2 may be about 50 mol% to about 90 mol%, about 50 mol% to about 80 mol%, or about 60 mol% to about 80 mol% based on a total of 100 mol% of transition metal, excluding lithium, in the main active material.

The amount of the third particles PTC3 may be about 10 parts by weight to about 30 parts by weight based on 100 parts by weight of the positive electrode active material. If the amount of the third particles PTC3 satisfies this range, deterioration of the lifetime and stability of the positive electrode active material may be minimized and capacity properties may be improved.

The positive electrode active material according to the present invention includes the first particles PTC1, the second particles PTC2, the third particles PTC3, and the fourth particles PTC4 in an appropriate ratio, and capacity and an operating voltage may be improved as compared to a common LMFP battery.

The above-described compound of Chemical Formula 4 may have low electrical conductivity compared to the compound of Chemical Formula 1. In embodiments of the present disclosure, the fourth particles PTC4 may be a single particle form, thereby improving electrical conductivity and energy density.

The first particles PTC1 provide advantages in having high stability and long lifetime. Using the structurally stable first particles PTC1 as the main material of the positive electrode active material may compensate for the relatively low stability and short lifetime of the fourth particles PTC4 may be compensated.

The positive electrode active material of the present disclosure may improve mixture density, capacity, and energy density by including the fourth particles PTC4 that are several micrometers in size with the base of the first particles PTC1 that are hundreds of nanometers in size. In embodiments, the pellet density of the positive electrode active material of the present disclosure may be about 2.0 g/cc to about 2.9 g/cc, or about 2.6 g/cc to about 2.8 g/cc, or about 2.0 g/cc to about 2.5 g/cc. A rechargeable lithium battery including the positive electrode active material of the present disclosure may exhibit improved low-temperature properties.

When the first particles PTC1 are single particles having a very small average particle diameter, a large amount of a binder BND may be required to attach the first particles PTC1 to a current collector COL1 (see FIG. 1). But, since the positive electrode active material of the present disclosure also includes the fourth particles PTC4 having a large average particle diameter as well as the first particles PTC1, the second particles PTC2, and the third particles PTC3, the positive electrode active material layer AML1 may smoothly attach to the current collector COL1 smoothly. That is, the amount of the binder BND needed in the positive electrode active material layer AML1 may be reduced due to the fourth particles PTC4.

A rechargeable lithium battery including the positive electrode active material according to embodiments of the present disclosure may have an average voltage of about 3.5 V to about 3.8 V during discharging about 0.1 C at between about 2.5 V and about 4.25 V. In addition, the energy density of the rechargeable lithium battery of the present disclosure may be about 450 Wh/kg to about 600 Wh/kg, about 500 Wh/kg to about 600 Wh/kg, or about 500 Wh/kg to about 550 Wh/kg.

### Method of Preparing Positive Electrode Active Material

A method of preparing the first particles PTC1 according to embodiments of the present disclosure will be explained in detail. An iron phosphate precursor, a lithium source, a carbon source and a dopant source may be added to a solvent and mixed. For example, the solvent may be water, ethanol or the like. The iron phosphate precursor may be a compound containing both iron and phosphor, or a mixture of a compound containing iron and a compound containing phosphor. For example, the iron phosphate precursor may include FePO₄·H₂O, or a mixture of FeSO₄ and H₃PO₄.

The lithium source may include at least one of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

The carbon source may include at least one of glucose, sucrose, fructose, cellulose, starch, citric acid, polyacrylic acid, polyethylene glycol, and dopamine.

The dopant source may include an oxide containing a dopant metal and/or a chloride containing a dopant metal. For example, the dopant source may include at least one of titanium oxide, magnesium oxide, vanadium oxide and aluminium oxide.

The mixture may be subjected to wet grinding. The wet grinding may be performed using a wet mill capable of controlling temperature. Particularly, the wet grinding may use at least one of a bead mill, ball mill, attrition mill, apex mill, super mill and basket mill. Through the wet grinding process, the particles in the mixture may be ground to a fine size.

A dried mixture may be formed by removing the solvent from the mixture. In an embodiment of the present disclosure, the formation of the dried mixture may include performing a direct evaporation method with respect to the mixture. The direct evaporation method may include, for example, static drying or spray drying.

The dried mixture may be baked under an inert atmosphere. The inert atmosphere may be a nitrogen atmosphere and/or an argon atmosphere. The temperature of the baking process may be about 500 °C to about 1000 °C, or about 600 °C to about 800 °C. The time of the baking process may be about 4 hours to about 20 hours, or about 6 hours to about 12 hours. Through the baking of the dried mixture, first particles PTC1 including the compound of Chemical Formula 1 may be formed.

A dry grinding process may be performed on the baked first particles PTC1. As a result, the first particles PTC1 may have a single particle form as shown in FIG. 6A.

The method of preparing the first particles PTC1 according to embodiments of the present disclosure will be explained in more detail. A manganese iron phosphate precursor, a lithium source, a carbon source and a dopant source may be added to a solvent and mixed. The solvent may be water, ethanol or the like.

The manganese iron phosphate precursor may be a compound containing manganese, iron, and phosphorus; a mixture including a compound containing manganese and a compound containing iron and phosphorus; or a mixture including a compound containing manganese, a compound containing iron and a compound containing phosphorus. For example, the manganese iron phosphate precursor may include MnₓFe₁₋ₓPO₄·H₂O; a mixture of MnCO₃, and FePO₄·H₂O; or a mixture of MnCO₃, FeSO₄ and H₃PO₄. Here, x may be about 0.5 to about 0.9. A wet grinding may be performed with on the mixture.

A dried mixture may be formed by removing the solvent from the mixture. The formation of the dried mixture may include performing a direct evaporation method on the mixture. The direct evaporation method may include static drying or spray drying. In order to form the first particles PTC1 in a single particle form, the static drying may preferably be used.

The dried mixture may be baked under an inert atmosphere. Through the baking of the dried mixture, the first particles PTC1 including the compound of Chemical Formula 1 may be formed. A dry grinding process may be performed with respect to the baked first particles PTC1. As a result, the first particles PTC1 may have a single particle form.

A method for preparing the secondary particle form of the first particles PTC1 according to embodiments of the present disclosure will be explained in more detail. As an embodiment of the present disclosure, the wet grinding may be omitted. Particularly, in order to maximize the average particle diameter of the finally prepared first particles PTC1, the wet grinding for the precursor particles may be omitted.

A dried mixture may be formed by removing the solvent from the mixture. In an embodiment of the present disclosure, the formation of the dried mixture may include performing spray drying of the mixture. The spray drying may use a commonly used spray drying device. For example, the spray drying may use at least one of an ultrasonic wave spray drying device, an air nozzle spray drying device, an ultrasonic wave nozzle spray drying device, a filter expansion droplet generation device, and a static spray drying device.

By the wet grinding process, fine particles in the size of the primary particles NNP may be agglomerated with each other through the spray drying process to form secondary particles. Accordingly, by controlling the flow amount, flow rate, temperature, and retention time in the reactor of the carrier gas, and internal pressure in the spray drying process, the first particles PTC1 may be formed into a secondary particle form with a desired size.

In embodiments, the mixture that is a target for spray drying may have the total solid content of about 20% to about 40%. The total solid content may mean the weight of solid materials (i.e., dried mixture) remaining after evaporating the solvent based on the total weight of the mixture (i.e., spray solution), converted to a percentage. The spray solution may have the total solid content of about 30 wt%.

If the total solid content is less than about 20%, the average diameter of the first particles PTC1 may decrease, and defects may occur. If the total solid content is greater than about 40%, the control of the average diameter of the first particles PTC1 may become difficult, and deviations in the size of the first particles PTC1 may increase.

The spray solution according to embodiments may have a viscosity of about 1500 mPa·s to about 2500 mPa·s with the total solid content. For example, the spray solution may have a viscosity of about 2000 mPa·s.

In embodiments, the spray drying may be performed at a temperature of about 100 °C to about 300 °C. The spray gas (for example, air) used in the spray drying may be injected at a first temperature and exhausted at a second temperature. For example, the first temperature may be about 200 °C to about 250 °C. The second temperature may be about 80 °C to about 150 °C.

The flow rate of the spray solution in the spray drying may be about 30 ml/min to about 80 ml/min. If the flow rate is less than about 30 ml/min, nozzle blocking phenomenon and reduced productivity may occur. If the flow rate is greater than about 80 ml/min, incomplete drying of the mixture may occur due to moisture condensation in a spray drier. The injection pressure of the spray solution may be about 0.3 MPa to about 0.7 MPa. For example, the injection pressure of the spray solution may be about 0.5 MPa.

The dried mixture may be baked under an inert atmosphere. The inert atmosphere may be a nitrogen atmosphere and/or an argon atmosphere. The temperature of the baking process may be about 500 °C to about 1000 °C, or about 600 °C to about 800 °C. The performance time of the baking process may be about 4 hours to about 20 hours, or about 6 hours to about 12 hours. Through the baking of the dried mixture, the first particles PTC1 including the compound of Chemical Formula 1 may be formed.

A method of preparing the secondary particle form of the first particles PTC1 according to the present disclosure will be explained in detail. A carbon source may be introduced to an iron phosphate precursor, and a carbon coating layer may be uniformly formed on the surface of the primary particles NNP. Then, the primary particles NNP may be closely agglomerated through the spray drying to form dense secondary spherical particles. The second particles PTC2 according to embodiments of the present disclosure may be obtained as follows. In 100 ml of distilled water, 0.170 g of MnSO₄H₂O and 0.228 g of (NH₄)₂S₂O₈ are dissolved, and sulfuric acid is added thereto to adjust pH to 1, followed by reacting at about 130 °C for about 10 hours to obtain a solid precipitate. The precipitate thus obtained was washed with distilled water several times and dried at about 300 °C for about 3 hours to obtain MnO₂ as a solid having an average particle diameter of about 5 µm. Li₂CO₃ and the MnO₂ synthesized are mixed so that the molar ratio of Li and Mn becomes about 1:2, and heated at about 600 °C for about 10 hours to synthesize LiMn₂O₄ particles having an average particle diameter of about 7 µm.

A method of preparing the third particles PTC3 according to an embodiment of the present disclosure will be explained in detail. A nickel-based precursor may be prepared. The nickel-based precursor may include Ni of the above-described Chemical Formula 3. The Ni content relative to the total content of the metal in the nickel-based precursor is greater than about 50 %. The nickel-based precursor further includes Mn, and may also further include Co.

In an embodiment, the nickel-based precursor may be obtained through a co-precipitation method. For example, the co-precipitation method may include dissolving a transition metal raw material in a solvent such as distilled water, and continuously adding a solution of a transition metal salt together with a chelating agent and an alkaline aqueous solution to a reactor to cause precipitation. After collecting the precipitate in a slurry type, the slurry solution may be filtered and dried to obtain a nickel-based precursor that is a metal composite oxide.

In the present disclosure, the transition metal raw material includes a metal salt of Ni. The transition metal raw material may further include at least one salt of a metal among Co and Mn. The metal salt may include a sulfate, a nitrate, an acetate, a halide, a hydroxide or the like, and any one of these may be used as long as it is dissolved in a solvent. The transition metal raw material according to embodiments may include a nickel salt, a cobalt salt and a manganese salt. The transition metal raw material may be blended by controlling the molar ratio so that the nickel-based precursor has the Ni content of about 50 at% or more.

The nickel-based precursor and a lithium source may be mixed in a certain ratio to form a mixture. For example, the nickel-based precursor and the lithium source may be mixed in a molar ratio of about 1: 1. The lithium source may include at least one of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

By removing the solvent from the mixture, a dried mixture may be formed. The dried mixture may be baked. The temperature of a baking process may be about 700 °C to about 1000 °C, or about 900 °C to about 1000 °C. The baking process may be performed under an oxidizing atmosphere such as air and oxygen. The heating time of the baking process may be about 10 hours to about 30 hours. In another embodiment of the present disclosure, a preliminary baking process may be additionally performed at about 150 °C to about 800 °C prior to the baking process.

In an embodiment of the present disclosure, the baking process may be performed after additionally adding a melting agent to the mixture. The melting agent may be a compound containing at least one of Zr, La, S and Nb. By using the melting agent, the third particles PTC3 may be smoothly made into a single particle form. In addition, the average diameter of the third particles PTC3 may increase.

Through the baking process, the third particles PTC3 may be formed from the mixture containing the nickel-based precursor and the lithium source. A grinding process may be performed with respect to the prepared third particles PTC3.

A coating process may be performed on the ground third particles PTC3. Particularly, the third particles PTC3 and a coating raw material may be added to a solvent and mixed. The coating raw material may include, for example, aluminium, titanium, magnesium, zirconium, molybdenum and/or niobium. After filtering and drying the third particles PTC3, surface treatment may be performed on the third particles PTC3. The surface treatment may include a heating process under an oxidizing atmosphere such as air and oxygen. The surface treatment may be performed at a temperature of about 500 °C to about 800 °C.

In another embodiment of the present disclosure, the coating process may include a dry coating process. For example, the third particles PTC3 and the coating raw material may be put in a dry coating device and mixed by stirring without a solvent. The surface treatment may be performed with respect to the obtained dried mixture.

The fourth particles PTC4 according to an embodiment of the present disclosure may be a lithium iron (Fe) oxide ('LFO') that may alleviate Li ion loss. The LFO may be a compound having a composition of Li₅FeO₄. The LFO is a Li-rich cathode material and may have high anion redox reactivity. The LFO may be introduced as an additive in a cathode and may induce low energy density due to the presence of by-products in a cathode matrix. Additionally, the particle size of Fe₂O₄ starting material is among factors determining the reactivity of the LFO.

In addition, the fourth particles PTC4 according to an embodiment of the present disclosure may be a lithium cobalt oxide ('LCO') that may alleviate Li ion loss. The LCO may be a compound having a composition of Li₆CoO₄.

By mixing the first, second, and third particles PTC1, PTC2, PTC3 with the fourth particles PTC4 prepared by the above-described methods, the positive electrode active material according to the present disclosure may be prepared. The weight ratio of the fourth particles PTC4 may be about 90:10 to about 50:50, about 95:5 to about 99.5:0.5, or about 98.5:1.5 to about 99.5: 0.5 based on the total weight of the positive electrode active material.

The main active material composed of the first particles PTC1 and the second particles PTC2 may be about 70 parts by weight to about 90 parts by weight based on 100 parts by weight of the positive electrode active material. In the main active material composed of the first particles PTC1 and the second particles PTC2, the manganese content may be about 50 mol% to about 80 mol%, about 50 mol% to about 60 mol%, or about 55 mol% to about 80 mol% based on a total of 100 mol% of transition metal, excluding lithium, in the main active material.

Carbon element analysis according to embodiments of the present disclosure may be performed by an Elementar Micro Cube elemental analyzer. Particular operation method and conditions are as follows. About 1-2 mg of a sample is weighed in a tin cup, put in an automatic sampling tray, brought into a combustion tube via a ball valve, and burned at a combustion temperature of about 1000 °C. After that, the burned gas is reduced using reducing copper to form carbon dioxide. The carbon dioxide is detected using a TCD detector.

In the method of measuring the carbon content according to embodiments of the present disclosure, scanning electron microscopy-energy dispersive X-ray spectroscopy (SEM-EDS) is performed with respect to the surface of the particles, and quantitative analysis is performed. As the method of measuring the carbon content, an inductively coupled plasma-mass spectrometry (ICP-MS), an inductively coupled plasma optical emission spectroscopy (ICP-OES) or the like may be used in addition to the SEM-EDS.

Hereinafter, the Examples and Comparative Examples will be described. However, the Examples are only illustrations of the present disclosure, and the present disclosure is not limited to the Examples.

### Preparation Example 1: Preparation of First Particles in Single Particle Form

A Mn_{0.6}Fe_{0.4}PO₄ iron phosphate precursor, lithium carbonate and titanium dioxide were mixed in a molar ratio of about 1:1.03:0.004. To the mixture, 12 wt% of glucose was added. A wet grinding process was performed by ball milling the mixture. The mixture was evaporated and dried in a heating furnace tray and put in a vacuum oven for drying at about 120 °C for about 4 hours. The dried mixture was baked under a nitrogen atmosphere at about 750 °C for about 10 hours. The baked product was ground to obtain first particles in a single particle form. The average diameter of the first particles was about 100 nm to about 300 nm.

### Preparation Example 2: Preparation of Second Particles in Single Particle Form

In 100 ml of distilled water, 0.170 g of MnSO₄H₂O and 0.228 g of (NH₄)₂S₂O₈ were dissolved, and sulfuric acid was added thereto to adjust pH to 12, followed by reacting at about 130 °C for about 10 hours to obtain a solid precipitate. The precipitate thus obtained was washed with distilled water several times and dried at about 300 °C for about 3 hours to obtain MnO₂ as a solid having an average diameter of about 5 µm.

Li₂CO₃ and the MnO₂ thus synthesized were mixed so that the molar ratio of Li and Mn became about 1:2 and heated at about 600 °C for about 10 hours to synthesize LiMn₂O₄ particles having an average diameter of about 7 µm.

### Preparation Example 3: Preparation of Third Particles in Single Particle Form and Secondary Particle Form

A nickel-based precursor was prepared using a co-precipitation method. Particularly, nickel sulfate (NiSO₄·6H₂O), cobalt sulfate (CoSO₄·7H₂O) and manganese sulfate (Mn(SO₄)₃·H₂O) in a molar ratio of about 6:1:3 as the raw materials of a nickel-based metal hydroxide were dissolved in distilled water as a solvent to prepare a metal raw material mixture. The metal raw material mixture, ammonia water, and sodium hydroxide were put in a reactor and reacted. A slurry solution in the reactor was filtered and washed with distilled water with high purity. The washed material was dried in a hot air oven at about 210 °C for about 24 hours to obtain a small size precursor (Ni_{0.6}Co_{0.1}Mn_{0.3}(OH)₂) powder with an average diameter of about 4 µm.

The nickel-based precursor thus obtained and anhydrous lithium hydroxide (LiOH) were dry mixed using a Henschel mixer. The mixing was performed so that the molar ratio of lithium and a transition metal was about 1:1. The transition metal is the total sum of transition metals (Ni+Co+Mn) contained in the nickel-based precursor. A melting agent was additionally added to the mixture and heat treatment (i.e., baking process) was performed under an oxygen atmosphere at about 850 °C for about 15 hours to synthesize third particles as the nickel-based positive electrode active material. The third particles were ground using a Jet mill with a pressure of about 3 bars.

The third particles were added to distilled water and washed. Aluminium oxide corresponding to about 3 mol% based on the total sum of the transition metals of the third particles were added to perform aluminium coating. The third particles were dried at about 150 °C for about 12 hours and heated (i.e., surface treated) under an oxygen atmosphere at about 700 °C for about 15 hours.

### Preparation Example 4-1: Preparation of Fourth Particles (LFO) in Single Particle Form

In order to prepare Li₅FeO₄, LiOH·H₂O and Fe₂O₃ were mixed in a ratio of Li:Fe=5:1, and the mixed powder was milled in a spex mill for about 30 minutes and then manufactured into a pellet with a pressure of about 6.1 to about 6.3 tons. The pellet was synthesized at about 850 °C for about 20 hours. An air jet mill was used for grinding the powder at about 6000 rpm.

### Preparation Example 4-2: Preparation of Fourth Particles (LCO) in Single Particle Form

In order to prepare Li₆CoO₄, LiO and CoO were mixed in a ratio of Li:Co=6:1, and the mixed powder was sintered under a nitrogen atmosphere at about 600 °C for about 24 hours, and then cooled naturally. An air jet mill was used for grinding the powder at about 6000 rpm.

### Preparation Example 5-1: Preparation of Mixture 1 of Main Mixture 1 and Third Particles

Mixture 1 was prepared by mixing Main Mixture 1 (manganese content in the mixture was about 60 mol%) obtained by mixing the first particles of Preparation Example 1 and the second particles of Preparation Example 2 in a weight ratio of about 6:4, with the third particles of Preparation Example 3 in a weight ratio of about 90:10. In this case, the manganese content in Mixture 1 was about 60 mol% based on a total of 100 mol% of transition metal, excluding lithium, in Mixture 1.

### Preparation Example 5-2: Preparation of Mixture 2 of Main Mixture 1 and Third Particles

Mixture 2 was prepared by mixing Main Mixture 1 (manganese content in the mixture was about 60 mol%) obtained by mixing the first particles of Preparation Example 1 and the second particles of Preparation Example 2 in a weight ratio of about 6:4, with the third particles of Preparation Example 3 in a weight ratio of about 80:20. In this case, the manganese content in Mixture 2 was about 60 mol% based on a total of 100 mol% of transition metal, excluding lithium, in Mixture 2.

### Preparation Example 5-3: Preparation of Mixture 3 of Main Mixture 1 and Third Particles

Mixture 3 was prepared by mixing Main Mixture 1 (manganese content in the mixture was about 60 mol%) obtained by mixing the first particles of Preparation Example 1 and the second particles of Preparation Example 2 in a weight ratio of about 6:4, with the third particles of Preparation Example 3 in a weight ratio of about 70:30. In this case, the manganese content in Mixture 3 was about 60 mol% based on a total of 100 mol% of transition metal, excluding lithium, in Mixture 3.

### Preparation Example 5-4: Preparation of Mixture 4 of Main Mixture 2 and Third Particles

Mixture 4 was prepared by mixing Main Mixture 2 (manganese content in the mixture was about 70 mol%) obtained by mixing the first particles of Preparation Example 1 and the second particles of Preparation Example 2 in a weight ratio of about 50:50, with the third particles of Preparation Example 3 in a weight ratio of about 90:10. In this case, the manganese content in Mixture 4 was about 55 mol% based on a total of 100 mol% of transition metal, excluding lithium, in Mixture 4.

### Preparation Example 5-5: Preparation of Mixture 5 of Main Mixture 2 and Third Particles

Mixture 5 was prepared by mixing Main Mixture 2 (manganese content in the mixture was about 70 mol%) obtained by mixing the first particles of Preparation Example 1 and the second particles of Preparation Example 2 in a weight ratio of about 50:50, with the third particles of Preparation Example 3 in a weight ratio of about 80:20. In this case, the manganese content in Mixture 5 was about 55 mol% based on a total of 100 mol% of transition metal, excluding lithium, in Mixture 5.

### Preparation Example 5-6: Preparation of Mixture 6 of Main Mixture 2 and Third Particles

Mixture 6 was prepared by mixing Main Mixture 2 (manganese content in the mixture was about 70 mol%) obtained by mixing the first particles of Preparation Example 1 and the second particles of Preparation Example 2 in a weight ratio of about 50:50, with the third particles of Preparation Example 3 in a weight ratio of about 70:30. In this case, the manganese content in Mixture 6 was about 55 mol% based on a total of 100 mol% of transition metal, excluding lithium, in Mixture 6.

### Preparation Example 5-7: Preparation of Mixture 7 of Main Mixture 3 and Third Particles

Mixture 7 was prepared by mixing Main Mixture 3 (manganese content in the mixture was about 80 mol%) obtained by mixing the first particles of Preparation Example 1 and the second particles of Preparation Example 2 in a weight ratio of about 40:60, with the third particles of Preparation Example 3 in a weight ratio of about 90:10. In this case, the manganese content in Mixture 7 was about 60 mol% based on a total of 100 mol% of transition metal, excluding lithium, in Mixture 7.

### Preparation Example 5-8: Preparation of Mixture 8 of Main Mixture 3 and Third Particles

Mixture 8 was prepared by mixing Main Mixture 3 (manganese content in the mixture was about 80 mol%) obtained by mixing the first particles of Preparation Example 1 and the second particles of Preparation Example 2 in a weight ratio of about 40:60, with the third particles of Preparation Example 3 in a weight ratio of about 80:20. In this case, the manganese content in Mixture 8 was about 55 mol% based on a total of 100 mol% of transition metal, excluding lithium, in Mixture 8.

### Example 1-1: Preparation of Mixture of Mixture 1 in Single Particle Form and Fourth Particles

A positive electrode active material was prepared by mixing Mixture 1 containing the first particles in a single particle form and the fourth particles of Preparation Example 4-1 in a weight ratio of about 99.5:0.5.

### Example 1-2: Preparation of Mixture of Mixture 1 in Single Particle Form and Fourth Particles

A positive electrode active material was prepared by mixing Mixture 1 containing the first particles in a single particle form and the fourth particles of Preparation Example 4-1 in a weight ratio of about 99:1.

### Example 1-3: Preparation of Mixture of Mixture 1 in Single Particle Form and Fourth Particles

A positive electrode active material was prepared by mixing Mixture 1 containing the first particles in a single particle form and the fourth particles of Preparation Example 4-1 in a weight ratio of about 98.5:1.5.

### Example 1-4: Preparation of Mixture of Mixture 2 in Single Particle Form and Fourth Particles

A positive electrode active material was prepared by mixing Mixture 2 containing the first particles in a single particle form and the fourth particles of Preparation Example 4-1 in a weight ratio of about 99.5:0.5.

### Example 1-5: Preparation of Mixture of Mixture 2 in Single Particle Form and Fourth Particles

A positive electrode active material was prepared by mixing Mixture 2 containing the first particles in a single particle form and the fourth particles of Preparation Example 4-1 in a weight ratio of about 99: 1.

### Example 1-6: Preparation of Mixture of Mixture 2 in Single Particle Form and Fourth Particles

A positive electrode active material was prepared by mixing Mixture 2 containing the first particles in a single particle form and the fourth particles of Preparation Example 4-1 in a weight ratio of about 98.5:1.5.

### Example 1-7: Preparation of Mixture of Mixture 3 in Single Particle Form and Fourth Particles

A positive electrode active material was prepared by mixing Mixture 3 containing the first particles in a single particle form and the fourth particles of Preparation Example 4-1 in a weight ratio of about 99.5:0.5.

### Example 1-8: Preparation of Mixture of Mixture 3 in Single Particle Form and Fourth Particles

A positive electrode active material was prepared by mixing Mixture 3 containing the first particles in a single particle form and the fourth particles of Preparation Example 4-1 in a weight ratio of about 99: 1.

### Example 1-9: Preparation of Mixture of Mixture 3 in Single Particle Form and Fourth Particles

A positive electrode active material was prepared by mixing Mixture 3 containing the first particles in a single particle form and the fourth particles of Preparation Example 4-1 in a weight ratio of about 98.5:1.5.

### Example 1-10: Preparation of Mixture of Mixture 4 in Single Particle Form and Fourth Particles

A positive electrode active material was prepared by mixing Mixture 4 containing the first particles in a single particle form and the fourth particles of Preparation Example 4-1 in a weight ratio of about 99.5:0.5.

### Example 1-11: Preparation of Mixture of Mixture 4 in Single Particle Form and Fourth Particles

A positive electrode active material was prepared by mixing Mixture 4 containing the first particles in a single particle form and the fourth particles of Preparation Example 4-1 in a weight ratio of about 99:1.

### Example 1-12: Preparation of Mixture of Mixture 4 in Single Particle Form and Fourth Particles

A positive electrode active material was prepared by mixing Mixture 4 containing the first particles in a single particle form and the fourth particles of Preparation Example 4-1 in a weight ratio of about 98.5:1.5.

### Example 1-13: Preparation of Mixture of Mixture 5 in Single Particle Form and Fourth Particles

A positive electrode active material was prepared by mixing Mixture 5 containing the first particles in a single particle form and the fourth particles of Preparation Example 4-1 in a weight ratio of about 99.5:0.5.

### Example 1-14: Preparation of Mixture of Mixture 5 in Single Particle Form and Fourth Particles

A positive electrode active material was prepared by mixing Mixture 5 containing the first particles in a single particle form and the fourth particles of Preparation Example 4-1 in a weight ratio of about 99:1.

### Example 1-15: Preparation of Mixture of Mixture 5 in Single Particle Form and Fourth Particles

A positive electrode active material was prepared by mixing Mixture 5 containing the first particles in a single particle form and the fourth particles of Preparation Example 4-1 in a weight ratio of about 98.5:1.5.

### Example 1-16: Preparation of Mixture of Mixture 6 in Single Particle Form and Fourth Particles

A positive electrode active material was prepared by mixing Mixture 6 containing the first particles in a single particle form and the fourth particles of Preparation Example 4-1 in a weight ratio of about 99.5:0.5.

### Example 1-17: Preparation of Mixture of Mixture 6 in Single Particle Form and Fourth Particles

A positive electrode active material was prepared by mixing Mixture 6 containing the first particles in a single particle form and the fourth particles of Preparation Example 4-1 in a weight ratio of about 99: 1.

### Example 1-18: Preparation of Mixture of Mixture 6 in Single Particle Form and Fourth Particles

A positive electrode active material was prepared by mixing Mixture 6 containing the first particles in a single particle form and the fourth particles of Preparation Example 4-1 in a weight ratio of about 98.5:1.5.

### Example 1-19: Preparation of Mixture of Mixture 7 in Single Particle Form and Fourth Particles

A positive electrode active material was prepared by mixing Mixture 7 containing the first particles in a single particle form and the fourth particles of Preparation Example 4-1 in a weight ratio of about 99.5:0.5.

### Example 1-20: Preparation of Mixture of Mixture 7 in Single Particle Form and Fourth Particles

A positive electrode active material was prepared by mixing Mixture 7 containing the first particles in a single particle form and the fourth particles of Preparation Example 4-1 in a weight ratio of about 99: 1.

### Example 1-21: Preparation of Mixture of Mixture 7 in Single Particle Form and Fourth Particles

A positive electrode active material was prepared by mixing Mixture 7 containing the first particles in a single particle form and the fourth particles of Preparation Example 4-1 in a weight ratio of about 98.5:1.5.

### Example 1-22: Preparation of Mixture of Mixture 8 in Single Particle Form and Fourth Particles

A positive electrode active material was prepared by mixing Mixture 8 containing the first particles in a single particle form and the fourth particles of Preparation Example 4-1 in a weight ratio of about 99.5:0.5.

### Example 1-23: Preparation of Mixture of Mixture 8 in Single Particle Form and Fourth Particles

A positive electrode active material was prepared by mixing Mixture 8 containing the first particles in a single particle form and the fourth particles of Preparation Example 4-1 in a weight ratio of about 99:1.

### Example 1-24: Preparation of Mixture of Mixture 8 in Single Particle Form and Fourth Particles

A positive electrode active material was prepared by mixing Mixture 8 containing the first particles in a single particle form and the fourth particles of Preparation Example 4-1 in a weight ratio of about 98.5:1.5.

### Example 2-1: Preparation of Mixture of Mixture 1 in Secondary Particle Form and Fourth Particles

A positive electrode active material was prepared by mixing Mixture 1 containing the first particles in a secondary particle form and the fourth particles of Preparation Example 4-1 in a weight ratio of about 99.5:0.5.

### Example 2-2: Preparation of Mixture of Mixture 1 in Secondary Particle Form and Fourth Particles

A positive electrode active material was prepared by mixing Mixture 1 containing the first particles in a secondary particle form and the fourth particles of Preparation Example 4-1 in a weight ratio of about 99:1.

### Example 3-1: Preparation of Mixture of Mixture 1 in Single Particle Form and Fourth Particles

A positive electrode active material was prepared by mixing Mixture 1 containing the first particles in a single particle form and the fourth particles of Preparation Example 4-2 in a weight ratio of about 99.5:0.5.

### Example 3-2: Preparation of Mixture of Mixture 1 in Single Particle Form and Fourth Particles

A positive electrode active material was prepared by mixing Mixture 1 containing the first particles in a single particle form and the fourth particles of Preparation Example 4-2 in a weight ratio of about 99: 1.

### Example 3-3: Preparation of Mixture of Mixture 1 in Single Particle Form and Fourth Particles

A positive electrode active material was prepared by mixing Mixture 1 containing the first particles in a single particle form and the fourth particles of Preparation Example 4-2 in a weight ratio of about 98.5:1.5.

### Example 3-4: Preparation of Mixture of Mixture 2 in Single Particle Form and Fourth Particles

A positive electrode active material was prepared by mixing Mixture 2 containing the first particles in a single particle form and the fourth particles of Preparation Example 4-2 in a weight ratio of about 99.5:0.5.

### Example 3-5: Preparation of Mixture of Mixture 2 in Single Particle Form and Fourth Particles

A positive electrode active material was prepared by mixing Mixture 2 containing the first particles in a single particle form and the fourth particles of Preparation Example 4-2 in a weight ratio of about 99: 1.

### Example 3-6: Preparation of Mixture of Mixture 2 in Single Particle Form and Fourth Particles

A positive electrode active material was prepared by mixing Mixture 2 containing the first particles in a single particle form and the fourth particles of Preparation Example 4-2 in a weight ratio of about 98.5:1.5.

### Example 3-7: Preparation of Mixture of Mixture 3 in Single Particle Form and Fourth Particles

A positive electrode active material was prepared by mixing Mixture 3 containing the first particles in a single particle form and the fourth particles of Preparation Example 4-2 in a weight ratio of about 99.5:0.5.

### Example 3-8: Preparation of Mixture of Mixture 3 in Single Particle Form and Fourth Particles

A positive electrode active material was prepared by mixing Mixture 3 containing the first particles in a single particle form and the fourth particles of Preparation Example 4-2 in a weight ratio of about 99:1.

### Example 3-9: Preparation of Mixture of Mixture 3 in Single Particle Form and Fourth Particles

A positive electrode active material was prepared by mixing Mixture 3 containing the first particles in a single particle form and the fourth particles of Preparation Example 4-2 in a weight ratio of about 98.5:1.5.

### Example 3-10: Preparation of Mixture of Mixture 4 in Single Particle Form and Fourth Particles

A positive electrode active material was prepared by mixing Mixture 4 containing the first particles in a single particle form and the fourth particles of Preparation Example 4-2 in a weight ratio of about 99.5:0.5.

### Example 3-11: Preparation of Mixture of Mixture 4 in Single Particle Form and Fourth Particles

A positive electrode active material was prepared by mixing Mixture 4 containing the first particles in a single particle form and the fourth particles of Preparation Example 4-2 in a weight ratio of about 99:1.

### Example 3-12: Preparation of Mixture of Mixture 4 in Single Particle Form and Fourth Particles

A positive electrode active material was prepared by mixing Mixture 4 containing the first particles in a single particle form and the fourth particles of Preparation Example 4-2 in a weight ratio of about 98.5:1.5.

### Example 3-13: Preparation of Mixture of Mixture 5 in Single Particle Form and Fourth Particles

A positive electrode active material was prepared by mixing Mixture 5 containing the first particles in a single particle form and the fourth particles of Preparation Example 4-2 in a weight ratio of about 99.5:0.5.

### Example 3-14: Preparation of Mixture of Mixture 5 in Single Particle Form and Fourth Particles

A positive electrode active material was prepared by mixing Mixture 5 containing the first particles in a single particle form and the fourth particles of Preparation Example 4-2 in a weight ratio of about 99: 1.

### Example 3-15: Preparation of Mixture of Mixture 5 in Single Particle Form and Fourth Particles

A positive electrode active material was prepared by mixing Mixture 5 containing the first particles in a single particle form and the fourth particles of Preparation Example 4-2 in a weight ratio of about 98.5:1.5.

### Example 3-16: Preparation of Mixture of Mixture 6 in Single Particle Form and Fourth Particles

A positive electrode active material was prepared by mixing Mixture 6 containing the first particles in a single particle form and the fourth particles of Preparation Example 4-2 in a weight ratio of about 99.5:0.5.

### Example 3-17: Preparation of Mixture of Mixture 6 in Single Particle Form and Fourth Particles

A positive electrode active material was prepared by mixing Mixture 6 containing the first particles in a single particle form and the fourth particles of Preparation Example 4-2 in a weight ratio of about 99: 1.

### Example 3-18: Preparation of Mixture of Mixture 6 in Single Particle Form and Fourth Particles

A positive electrode active material was prepared by mixing Mixture 6 containing the first particles in a single particle form and the fourth particles of Preparation Example 4-2 in a weight ratio of about 98.5:1.5.

### Example 3-19: Preparation of Mixture of Mixture 7 in Single Particle Form and Fourth Particles

A positive electrode active material was prepared by mixing Mixture 7 containing the first particles in a single particle form and the fourth particles of Preparation Example 4-2 in a weight ratio of about 99.5:0.5.

### Example 3-20: Preparation of Mixture of Mixture 7 in Single Particle Form and Fourth Particles

A positive electrode active material was prepared by mixing Mixture 7 containing the first particles in a single particle form and the fourth particles of Preparation Example 4-2 in a weight ratio of about 99:1.

### Example 3-21: Preparation of Mixture of Mixture 7 in Single Particle Form and Fourth Particles

A positive electrode active material was prepared by mixing Mixture 7 containing the first particles in a single particle form and the fourth particles of Preparation Example 4-2 in a weight ratio of about 98.5:1.5.

### Example 3-22: Preparation of Mixture of Mixture 8 in Single Particle Form and Fourth Particles

A positive electrode active material was prepared by mixing Mixture 8 containing the first particles in a single particle form and the fourth particles of Preparation Example 4-2 in a weight ratio of about 99.5:0.5.

### Example 3-23: Preparation of Mixture of Mixture 8 in Single Particle Form and Fourth Particles

A positive electrode active material was prepared by mixing Mixture 8 containing the first particles in a single particle form and the fourth particles of Preparation Example 4-2 in a weight ratio of about 99:1.

### Example 3-24: Preparation of Mixture of Mixture 8 in Single Particle Form and Fourth Particles

A positive electrode active material was prepared by mixing Mixture 8 containing the first particles in a single particle form and the fourth particles of Preparation Example 4-2 in a weight ratio of about 98.5:1.5.

### Example 4-1: Preparation of Mixture of Mixture 1 in Secondary Particle Form and Fourth Particles

A positive electrode active material was prepared by mixing Mixture 1 containing the first particles in a secondary particle form and the fourth particles of Preparation Example 4-2 in a weight ratio of about 99.5:0.5.

### Example 4-2: Preparation of Mixture of Mixture 1 in Secondary Particle Form and Fourth Particles

A positive electrode active material was prepared by mixing Mixture 1 containing the first particles in a secondary particle form and the fourth particles of Preparation Example 4-2 in a weight ratio of about 99: 1.

### Comparative Example 1-1: Preparation of Positive Electrode Active Material Composed of Only Third Particles

A positive electrode active material composed of only the third particles in a single particle form of Preparation Example 3 was prepared.

### Comparative Example 1-2: Preparation of Positive Electrode Active Material Composed of Only Second Particles

A positive electrode active material composed of only the second particles in a single particle form of Preparation Example 2 was prepared.

### Comparative Example 1-3: Preparation of Positive Electrode Active Material Composed of Only First Particles

A positive electrode active material composed of only the first particles of Preparation Example 1 was prepared.

### Comparative Example 1-4: Preparation of Positive Electrode Active Material Composed of Only Fourth Particles

A positive electrode active material composed of only the fourth particles in a single particle form of Preparation Example 4 was prepared.

### Comparative Example 1-5: Preparation of Positive Electrode Active Material Composed of Main Mixture 1

A positive electrode active material was prepared by mixing Comparative Example 1-3 and Comparative Example 1-2 in a weight ratio of about 65:35. In this case, the manganese content in the mixture was about 60 mol% based on a total of 100 mol% of transition metal, excluding lithium, in the mixture.

### Comparative Example 1-6: Preparation of Positive Electrode Active Material Composed of Main Mixture 2

A positive electrode active material was prepared by mixing Comparative Example 1-3 and Comparative Example 1-2 in a weight ratio of about 50:50. In this case, the manganese content in the mixture was about 70 mol% based on a total of 100 mol% of transition metal, excluding lithium, in the mixture.

### Comparative Example 1-7: Preparation of Positive Electrode Active Material Composed of Main Mixture 3

A positive electrode active material was prepared by mixing Comparative Example 1-3 and Comparative Example 1-2 in a weight ratio of about 40:60. In this case, the manganese content in the mixture was about 80 mol% based on a total of 100 mol% of transition metal, excluding lithium, in the mixture.

### Comparative Example 1-8: Preparation of Positive Electrode Active Material Composed of Mixture 1

A positive electrode active material was prepared by mixing Comparative Example 1-5 and Comparative Example 1-1 in a weight ratio of about 90:10. In this case, the manganese content in the mixture was about 60 mol% based on a total of 100 mol% of transition metal, excluding lithium, in the mixture.

### Comparative Example 1-9: Preparation of Positive Electrode Active Material Using Mixture 2

A positive electrode active material was prepared by mixing Comparative Example 1-5 and Comparative Example 1-1 in a weight ratio of about 80:20. In this case, the manganese content in the mixture was about 60 mol% based on a total of 100 mol% of transition metal, excluding lithium, in the mixture.

### Comparative Example 1-10: Preparation of Positive Electrode Active Material Using Mixture 3

A positive electrode active material was prepared by mixing Comparative Example 1-5 and Comparative Example 1-1 in a weight ratio of about 70:30. In this case, the manganese content in the mixture was about 60 mol%. based on a total of 100 mol% of transition metal, excluding lithium, in the mixture

### Comparative Example 1-11: Preparation of Positive Electrode Active Material Using Mixture 4

A positive electrode active material was prepared by mixing Comparative Example 1-6 and Comparative Example 1-1 in a weight ratio of about 90:10. In this case, the manganese content in the mixture was about 55 mol% based on a total of 100 mol% of transition metal, excluding lithium, in the mixture.

### Comparative Example 1-12: Preparation of Positive Electrode Active Material Using Mixture 5

A positive electrode active material was prepared by mixing Comparative Example 1-6 and Comparative Example 1-1 in a weight ratio of about 80:20. In this case, the manganese content in the mixture was about 55 mol% based on a total of 100 mol% of transition metal, excluding lithium, in the mixture.

### Comparative Example 1-13: Preparation of Positive Electrode Active Material Using Mixture 6

A positive electrode active material was prepared by mixing Comparative Example 1-6 and Comparative Example 1-1 in a weight ratio of about 70:30. In this case, the manganese content in the mixture was about 55 mol% based on a total of 100 mol% of transition metal, excluding lithium, in the mixture.

### Comparative Example 1-14: Preparation of Positive Electrode Active Material Using Mixture 7

A positive electrode active material was prepared by mixing Comparative Example 1-7 and Comparative Example 1-1 in a weight ratio of about 90:10. In this case, the manganese content in the mixture was about 60 mol% based on a total of 100 mol% of transition metal, excluding lithium, in the mixture.

### Comparative Example 1-15: Preparation of Positive Electrode Active Material Using Mixture 8

A positive electrode active material was prepared by mixing Comparative Example 1-7 and Comparative Example 1-1 in a weight ratio of about 80:20. In this case, the manganese content in the mixture was about 55 mol% based on a total of 100 mol% of transition metal, excluding lithium, in the mixture.

### Manufacture of Positive Electrode

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied on an aluminium current collector, dried and rolled to manufacture a positive electrode.

### Manufacture of Negative Electrode

95 wt% of graphite, 3 wt% of a binder, and 2 wt% of a conductive material were mixed in an N-methylpyrrolidone solvent to prepare a negative electrode active material slurry. The negative electrode active material slurry was applied on a copper current collector, dried and rolled to manufacture a negative electrode.

### Fabrication of Rechargeable Lithium Battery

A full coin cell was fabricated using the positive electrode and the negative electrode prepared above. A polypropylene film (Celgard^{™} 3510) was used as a separator. As an electrolyte, an electrolyte solution obtained by mixing 1.3 M LiPF₆ with a mixture solvent of ethylene carbonate (EC): diethyl carbonate (DEC): fluoroethylene carbonate (FEC) (2:6:2 by volume ratio) was used.

### Evaluation Example 1: Analysis on the Surface of Positive Electrode Active Material

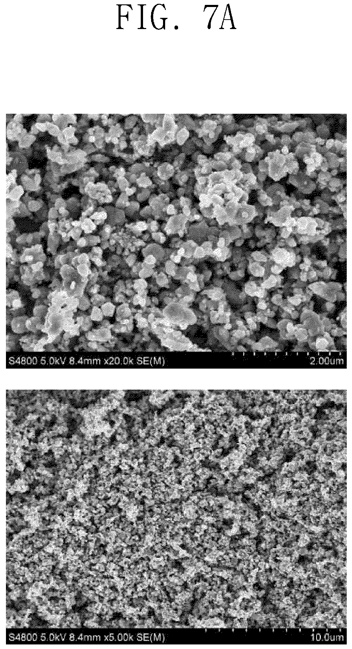

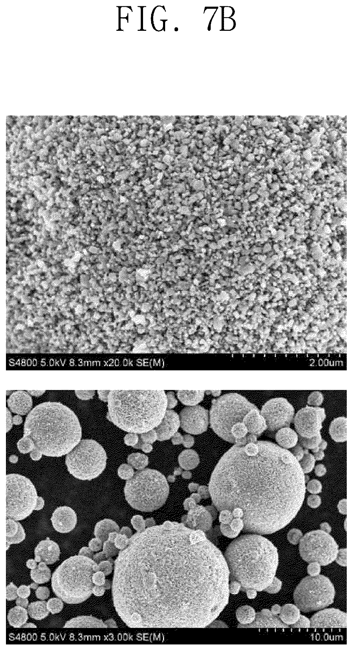

Scanning electron microscope (SEM) images of the first particles prepared in Example 1 are shown in FIG. 7A. The SEM images of the second particles with a single crystal form are shown in FIG. 7B. Referring to FIG. 7A, it can be seen that the first particles according to an embodiment of the present disclosure have a fine single particle form with a nano-size. Referring to FIG. 7B, it can be seen that the second particles according to an embodiment of the present disclosure have a single crystal form with a micrometer size. It can also be seen that the second particles have a single crystal form and are bigger than the first particles.

### Evaluation Example 2: Evaluation of Active Material

The average pellet density (PD) of the positive electrodes of Examples 1-1 to 1-24, Examples 3-1 to 3-24 and Comparative Examples 1-1 to 1-15 is shown in Tables 1 to 4. The average pellet density was measured by putting about 3 g of a positive electrode active material in a pellet mold and applying about 3.3 US tons for about 30 seconds.

### Evaluation Example 3: Evaluation of Battery Properties

The properties of the rechargeable lithium batteries fabricated using the positive electrode active materials of Examples 1-1 to 1-24 and 3-1 to 3-24 and Comparative Examples 1-1 to 1-15 were evaluated.

Rechargeable lithium batteries were divided into coin cells and powder forms and initially charged under constant current (about 0.2 C) and constant voltage (about 5 V) conditions, and, after resting for about 10 minutes, discharged until about 3.0 V under constant current (about 0.2 C) conditions to carry out initial charging and discharging. Also, additional powders were produced and positive electrode energy density was measured. The evaluation results on battery properties are shown in Tables 1 to 4 below.

**[Table 1]**

| | **Formation** | | | | **Lifetime** | **PD** | **ED** |
|---|---|---|---|---|---|---|---|
| | **0.2 C charge** | **0.2 C discharge** | **0.2 C efficiency** | **Average voltage** | **%, @50cy** | **g/cc** | **Wh/kg** |
| Example 1-1 | 151.1 | 137.9 | 91.3% | 3.76 | 97.9 | 2.62 | 519 |
| Example 1-2 | 153.9 | 137.2 | 89.2% | 3.76 | 97.7 | 2.62 | 516 |
| Example 1-3 | 156.7 | 136.5 | 87.1% | 3.76 | 97.6 | 2.63 | 513 |
| Example 1-4 | 154.2 | 139.6 | 90.6% | 3.76 | 98.0 | 2.63 | 525 |
| Example 1-5 | 157.0 | 138.9 | 88.5% | 3.76 | 97.9 | 2.63 | 522 |
| Example 1-6 | 159.8 | 138.2 | 86.5% | 3.76 | 97.7 | 2.63 | 520 |
| Example 1-7 | 167.5 | 149.8 | 89.4% | 3.70 | 97.9 | 2.61 | 554 |
| Example 1-8 | 170.3 | 149.0 | 87.5% | 3.70 | 97.7 | 2.61 | 551 |
| Example 1-9 | 173.0 | 148.3 | 85.7% | 3.70 | 97.6 | 2.62 | 549 |
| Example 1-10 | 145.3 | 133.2 | 91.7% | 3.73 | 97.2 | 2.61 | 497 |
| Example 1-11 | 148.1 | 132.5 | 89.5% | 3.73 | 97.3 | 2.74 | 494 |
| Example 1-12 | 151.0 | 131.9 | 87.3% | 3.73 | 97.2 | 2.74 | 492 |
| Example 1-13 | 154.2 | 139.6 | 90.6% | 3.78 | 97.4 | 2.73 | 528 |
| Example 1-14 | 157.0 | 138.9 | 88.5% | 3.78 | 97.5 | 2.73 | 525 |
| Example 1-15 | 159.8 | 138.2 | 86.5% | 3.78 | 97.3 | 2.74 | 522 |
| Example 1-16 | 163.1 | 146.1 | 89.6% | 3.76 | 97.8 | 2.73 | 549 |
| Example 1-17 | 165.8 | 145.3 | 87.6% | 3.76 | 97.5 | 2.75 | 546 |
| Example 1-18 | 168.6 | 144.6 | 85.8% | 3.76 | 97.6 | 2.74 | 544 |
| Example 1-19 | 141.4 | 130.0 | 91.9% | 3.75 | 98.0 | 2.74 | 487 |
| Example 1-20 | 144.3 | 129.4 | 89.7% | 3.75 | 98.1 | 2.73 | 485 |
| Example 1-21 | 147.2 | 128.7 | 87.5% | 3.75 | 98.1 | 2.74 | 482 |
| Example 1-22 | 150.7 | 136.8 | 90.8% | 3.73 | 98.1 | 2.84 | 510 |
| Example 1-23 | 153.6 | 136.1 | 88.6% | 3.73 | 98.0 | 2.85 | 508 |
| Example 1-24 | 156.4 | 135.4 | 86.6% | 3.73 | 97.9 | 2.82 | 505 |
| Example 2-1 | 151.6 | 138.2 | 91.16% | 3.76 | 98.3 | 2.62 | 520 |
| Example 2-2 | 154.2 | 137.8 | 89.20% | 3.76 | 98.1 | 2.62 | 518 |

**Table 2**

| | **Formation 0.2 C charge** | **0.2 C discharge** | **Lifetime 0.2 C efficiency** | **PD Average voltage** | **%, @50cy** | **ED g/cc** | **Wh/kg** |
|---|---|---|---|---|---|---|---|
| Example 3-1 | 151.6 | 138.0 | 91.0% | 3.76 | 97.9 | 2.64 | 519 |
| Example 3-2 | 155.0 | 137.3 | 88.6% | 3.76 | 97.7 | 2.64 | 516 |
| Example 3-3 | 158.3 | 136.7 | 86.3% | 3.76 | 97.6 | 2.65 | 514 |
| Example 3-4 | 154.7 | 139.7 | 90.3% | 3.76 | 98.0 | 2.65 | 525 |
| Example 3-5 | 158.0 | 139.0 | 87.9% | 3.76 | 97.9 | 2.65 | 523 |
| Example 3-6 | 161.4 | 138.3 | 85.7% | 3.76 | 97.7 | 2.65 | 520 |
| Example 3-7 | 168.1 | 149.8 | 89.1% | 3.70 | 97.9 | 2.63 | 554 |
| Example 3-8 | 171.4 | 149.1 | 87.0% | 3.70 | 97.7 | 2.63 | 552 |
| Example 3-9 | 174.6 | 148.4 | 85.0% | 3.70 | 97.6 | 2.64 | 549 |
| Example 3-10 | 145.8 | 133.2 | 91.4% | 3.73 | 97.2 | 2.63 | 497 |
| Example 3-11 | 149.2 | 132.6 | 88.9% | 3.73 | 97.3 | 2.76 | 495 |
| Example 3-12 | 152.6 | 132.0 | 86.5% | 3.73 | 97.2 | 2.76 | 492 |
| Example 3-13 | 154.7 | 139.7 | 90.3% | 3.78 | 97.4 | 2.75 | 528 |
| Example 3-14 | 158.0 | 139.0 | 87.9% | 3.78 | 97.5 | 2.75 | 525 |
| Example 3-15 | 161.4 | 138.3 | 85.7% | 3.78 | 97.3 | 2.76 | 523 |
| Example 3-16 | 163.6 | 146.1 | 89.3% | 3.76 | 97.8 | 2.75 | 550 |
| Example 3-17 | 166.9 | 145.4 | 87.1% | 3.76 | 97.5 | 2.77 | 547 |
| Example 3-18 | 170.2 | 144.7 | 85.0% | 3.76 | 97.6 | 2.76 | 544 |
| Example 3-19 | 142.0 | 130.1 | 91.6% | 3.75 | 98.0 | 2.76 | 487 |
| Example 3-20 | 145.4 | 129.5 | 89.0% | 3.75 | 98.1 | 2.75 | 485 |
| Example 3-21 | 148.8 | 128.8 | 86.6% | 3.75 | 98.1 | 2.76 | 483 |
| Example 3-22 | 151.3 | 136.9 | 90.5% | 3.73 | 98.1 | 2.86 | 510 |
| Example 3-23 | 154.6 | 136.2 | 88.1% | 3.73 | 98.0 | 2.87 | 508 |
| Example 3-24 | 158.0 | 135.6 | 85.8% | 3.73 | 97.9 | 2.84 | 506 |
| Example 4-1 | 152.6 | 138.5 | 91.0% | 3.76 | 98.5 | 2.64 | 520 |
| Example 4-2 | 155.6 | 137.8 | 88.6% | 3.76 | 98.3 | 2.64 | 518 |

**Table 3**

| **DOE** | **Formation** | | | | **Lifetime** | **PD** | **ED** |
|---|---|---|---|---|---|---|---|
| | **0.2 C charge** | **0.2 C discharge** | **0.2 C efficiency** | **Average voltage** | **%, @50cy** | **g/cc** | **Wh/kg** |
| Comparative Example 1-1 | 222.8 | 192.1 | 86.2% | 3.65 | 97.8 | 3.10 | 701 |
| Comparative Example 1-2 | 106 | 104 | 98.1% | 3.95 | 98.4 | 2.70 | 383 |
| Comparative Example 1-3 | 155 | 145 | 93.5% | 3.60 | 94.5 | 2.23 | 511 |
| Comparative Example 1-4 | 713 | 0.5 | 0.1% | | | | |
| Comparative Example 1-5 | 140.0 | 132.7 | 94.8% | 3.72 | 96.6 | 2.40 | 477 |
| Comparative Example 1-6 | 133.5 | 127.4 | 95.4% | 3.78 | 97.1 | 2.47 | 461 |
| Comparative Example 1-7 | 129.2 | 123.9 | 95.9% | 3.81 | 97.7 | 2.52 | 450 |
| Comparative Example 1-8 | 148.2 | 138.6 | 93.5% | 3.70 | 97.6 | 2.61 | 502 |
| Comparative Example 1-9 | 151.4 | 140.3 | 92.7% | 3.70 | 97.7 | 2.61 | 513 |
| Comparative Example 1-10 | 164.8 | 150.5 | 91.3% | 3.70 | 97.8 | 2.61 | 557 |
| Comparative Example 1-11 | 142.4 | 133.9 | 94.0% | 3.73 | 97.1 | 2.72 | 485 |
| Comparative Example 1-12 | 151.4 | 140.3 | 92.7% | 3.73 | 97.3 | 2.72 | 516 |
| Comparative Example 1-13 | 160.3 | 146.8 | 91.6% | 3.73 | 97.5 | 2.72 | 546 |
| Comparative Example 1-14 | 138.6 | 130.7 | 94.3% | 3.75 | 97.8 | 2.75 | 471 |
| Comparative Example 1-15 | 147.9 | 137.5 | 93.0% | 3.75 | 98.0 | 2.81 | 498 |

Referring to Tables 1 and 2, it can be seen that the rechargeable lithium batteries of Examples 1-1 to 1-24 and 3-1 to 3-24 of the present disclosure have excellent capacity and efficiency properties. In comparing Table 1 to Table 3, it can be seen that the rechargeable lithium batteries according to Example 1-4, Example 1-19, Example 1-22 and Example 12-1 of the present disclosure have even higher efficiency. In addition, if comparing Table 2 to Table 3, it can be seen that the rechargeable lithium batteries according to Example 3-4, Example 3-19, Example 3-22 and Example 4-1 have particularly high efficiency. In addition, referring to Tables 1 to 3, it can be seen that, in comparing the positive electrode active materials according to the Examples to the positive electrode active materials according to the Comparative Examples, the average pellet density was similar.

In addition, referring to Tables 1 and 2, single crystal NCMs manufactured in accordance with Preparation Example 3, i.e. using third particles PTC3, are mixed in the Examples according to the present disclosure, and higher energy density than about 511 Wh/kg of Comparative Example 1-3 with LMFP alone, was achieved, and density and lifetime characteristics were improved.

Further, it can be seen that the Examples according to the present disclosure maximize energy density by including the fourth particles as a sacrificial positive electrode with the first particles to the third particles, in about 1 wt% or less based on the total weight of the positive electrode active material.

Through this, it can be seen that the optimal mixing ratio may be obtained for a case where the weight ratio of the total weight of the positive electrode active material and of the fourth particles is between about 99.5:0.5 and about 98.5:1.5, or about 99.5:0.5 and about 99:1.

A positive electrode active material according to the present invention includes olivine-based first particles that may be several hundred nanometers in size. The positive electrode active material also includes spinel-based second particles, layered-type third particles, and fourth particles in a single crystal form, which may be several micrometers in size, and which may serve as a sacrificial positive electrode. As a result, the mixture density, capacity, and energy density of the positive electrode active material of the present disclosure may be improved. A positive electrode active material layer according to the present invention may be attached to a positive electrode current collector with a relatively small amount of a binder. A rechargeable lithium battery according to the present invention may have a relatively high average voltage.

Although the embodiments of the present disclosure have been described, it is understood that the present disclosure is not limited to these embodiments. Rather, various changes and modifications can be made by one ordinary skilled in the art within the scope of the present disclosure.

Certain embodiments are set out in the following clauses:
Clause 1. A positive electrode active material comprising: first particles comprising a compound of Chemical Formula 1 and having an olivine structure; second particles comprising a compound of Chemical Formula 2 and having a spinel structure; third particles comprising a compound of Chemical Formula 3 and having a layered structure; and fourth particles comprising a compound of Chemical Formula 4, wherein a weight ratio of the fourth particles is about 0.5 wt% to about 5 wt% based on a total weight of the positive electrode active material,
   wherein Chemical Formula 1 is:

      Liₐ₁Mn_{b1}Feₓ₁₋A_{y1}PO_{4-c1}
   with 0.8≤a1≤1.2, 0.5≤b1≤0.9, 0.1≤x1≤0.5, 0.001≤y1≤0.05, 0<c1≤0.05, b1 + x1 + y1 = 1, and with A being at least one of Al, Ti, V and Mg,
   wherein Chemical Formula 2 is:

      Liₐ₂Mn_{b2}Bₓ₂O_{4-c2}
   with 0.8≤a2≤1.2, 1.9≤b2≤2.05, 0.001≤x2≤0.05 0≤c2≤0.05, and with B being at least one of Mg and Al,
   wherein Chemical Formula 3 is:

      Liₐ₃Ni_{b3}Coₓ₃Mn_{y3}C_{z1}O_{2-c3}
   with 0.8≤a3≤1.2, 0.5≤b3≤0.8, 0≤x3≤0.10, 0.1≤y3≤0.35, 0.01≤z1≤0.1, 0≤c3≤0.05, b3 + x3 + y3 + z1 = 1, and with C being at least one element of Al, Ti, Mg, Zr, Mo and Nb, and
   wherein Chemical Formula 4 is

      Liₐ₄E_{b4}Dₓ₄O_{4-c4}
   with 4.9≤a4≤6.1, 0.9≤b4≤1.1, 0≤x4≤0.015, 0≤c4≤0.05, with E being Fe or Co, and with D being Al.
Clause 2. The positive electrode active material of Clause 1, wherein an average diameter of the third particles is about 3 µm to about 10 µm.
Clause 3. The positive electrode active material of Clause 1 or Clause 2, wherein at least one of the third particles and the fourth particles has a single particle form.
Clause 4. The positive electrode active material of any preceding Clause, wherein an average diameter of the fourth particles is about 3 µm to about 10 µm.
Clause 5. The positive electrode active material of any preceding Clause, wherein a pellet density of the positive electrode active material is about 2.0 g/cc to about 2.8 g/cc, or about 2.6 g/cc to about 2.8 g/cc.
Clause 6. A positive electrode for a rechargeable lithium battery, the positive electrode comprising: a positive electrode current collector; and a positive electrode active material layer on the positive electrode current collector, wherein the positive electrode active material layer comprises the positive electrode active material according to claim 1, a conductive material and, a binder.
Clause 7. The positive electrode for a rechargeable lithium battery of Clause 6, wherein an amount of the binder is about 0.5 parts by weight to about 5 parts by weight based on 100 parts by weight of the positive electrode active material layer.

## Claims

1. A positive electrode active material comprising:
first particles comprising a compound of Chemical Formula 1 and having an olivine structure;
second particles comprising a compound of Chemical Formula 2 and having a spinel structure;
third particles comprising a compound of Chemical Formula 3 and having a layered structure; and
fourth particles comprising a compound of Chemical Formula 4,
wherein a weight ratio of the fourth particles is about 0.5 wt% to about 5 wt% based on a total weight of the positive electrode active material,
wherein Chemical Formula 1 is:
Liₐ₁Mn_{b1}Feₓ₁A_{y1}PO_{4-c1}
with 0.8≤a1≤1.2, 0.5≤b1≤0.9, 0.1≤x1≤0.5, 0.001≤y1≤0.05, 0<c1≤0.05, b1 + x1 + y1 = 1, and with A being at least one of Al, Ti, V and Mg,
wherein Chemical Formula 2 is:
Liₐ₂Mn_{b2}Bₓ₂O_{4-c2}
with 0.8≤a2≤1.2, 1.9≤b2≤2.05, 0≤x2≤0.05 0≤c2≤0.05, and with B being at least one of Mg and Al,
wherein Chemical Formula 3 is:
Liₐ₃Ni_{b3}Coₓ₃Mn_{y3}C_{z1}O_{2-c3}
with 0.8≤a3≤1.2, 0.5≤b3≤0.8, 0≤x3≤0.10, 0.1≤y3≤0.35, 0≤z1≤0.1, 0≤c3≤0.05, b3 + x3 + y3 + z1 = 1, and with C being at least one element of Al, Ti, Mg, Zr, Mo and Nb, and
wherein Chemical Formula 4 is
Liₐ₄E_{b4}Dₓ₄O_{4-c4}
with 4.9≤a4≤6.1, 0.9≤b4≤1.1, 0≤x4≤0.015, 0≤c4≤0.05, with E being Fe or Co, and with D being Al.

2. The positive electrode active material of claim 1, wherein the fourth particles are configured to be electrochemically inactive after a first cycle.

3. The positive electrode active material of claim 1 or claim 2, wherein the weight ratio of the fourth particles is about 0.5 wt% to about 1.5 wt% based on the total weight of the positive electrode active material.

4. The positive electrode active material of any preceding claim, wherein the first particles and the second particles constitute a main active material, and
an amount of the main active material is about 70 parts by weight to about 90 parts by weight based on 100 parts by weight of the positive electrode active material.

5. The positive electrode active material of any preceding claim, wherein the first particles and the second particles constitute a main active material, and
an amount of manganese in the main active material is about 50 mol% to about 80 mol% based on a total of 100 mol% of transition metal, excluding lithium, in the main active material.

6. The positive electrode active material of any preceding claim, wherein a mixing ratio of the first particles and the second particles is about 4:6 to about 6:4 based on weight.

7. The positive electrode active material of any preceding claim, wherein each of the first particles comprises at least one first primary particle, and
wherein the second particles have a secondary particle form in which a plurality of second primary particles are agglomerated.

8. The positive electrode active material of claim 7, wherein an average diameter of the first primary particles is smaller than an average diameter of the second primary particles.

9. The positive electrode active material of claim 7 or claim 8, wherein the first particles have a single particle form, an average diameter of the first particles is about 0.5 µm to about 2.5 µm, and
an average diameter of the first primary particles is about 100 nm to about 200 nm.

10. The positive electrode active material of claim 7 or claim 8, wherein each of the first particles comprises a plurality of primary particles that are agglomerated to each other,
an average diameter of the first particles is about 3 µm to about 10 µm, and
an average diameter of the first primary particles is about 50 nm to about 150 nm.

11. The positive electrode active material of any one of claims 7 to 10, wherein an average diameter of the second primary particles is about 0.5 µm to about 2.5 µm.

12. The positive electrode active material of any one of claims 7 to 11, wherein each of the first particles comprise a coating layer comprising carbon, and
an amount of carbon in the first particles is about 1.5 wt% to about 2.5 wt%.

13. The positive electrode active material of any preceding claim, wherein the third particles have a form in which a plurality of single particles are attached to each other, and
an average diameter of the first particles is smaller than an average diameter of the plurality of single particles.

14. A positive electrode for a rechargeable lithium battery, the positive electrode comprising:
a positive electrode current collector; and
a positive electrode active material layer on the positive electrode current collector,
wherein the positive electrode active material layer comprises the positive electrode active material according to any one of claims 1 to 13, a conductive material and, a binder.

15. A rechargeable lithium battery, comprising:
the positive electrode according to claim 14;
a negative electrode comprising a negative electrode current collector and a negative electrode active material layer on the negative electrode current collector; and
a separator between the positive electrode and the negative electrode.
